# EUROPEAN PATENT APPLICATION

(11) **EP 4 546 509 A1**
(43) Date of publication of application: **30.04.2025**
(21) Application number: 22961817.8
(22) Date of filing: 14.10.2022
(51) Int. Cl.: H01M 10/6554, H01M 10/42

(54) **BATTERY AND ELECTRIC DEVICE**

(71) Applicant: Contemporary Amperex Technology (Hong Kong) Limited, Central, Central And Western District (HK)
(72) Inventor: LIU, Ruidi, Ningde, Fujian 352100 (CN); WANG, Zengzhong, Ningde, Fujian 352100 (CN); WU, Youxin, Ningde, Fujian 352100 (CN); WANG, Peng, Ningde, Fujian 352100 (CN)
(74) Representative: Gong, Jinping
(86) International application number: PCT/CN2022/125517
(87) International publication number: WO 2024/077631

(57) **Abstract**

A battery (10) and an electric device (1) are disclosed. The battery (10) includes a thermally-conductive member (40) and a battery module (20). The thermally-conductive member (40) is disposed in a first direction, and the first direction is a length direction of the battery (10) or a moving direction of the electric device (1) with the battery (10). The battery module (20) includes at least one battery cell (21), and the battery module (20) is disposed in the first direction. The battery cell (21) includes a plurality of surfaces, the plurality of surfaces including a first surface (2111) with the largest area. The battery cell (21) is in thermal-conduction connection with the thermally-conductive member (40) at least via the first surface (2111).

## Description

### TECHNICAL FIELD

This application relates to the field of battery technologies, and in particular, to a battery and an electric device.

### BACKGROUND

In recent years, with economic development, battery technologies have been widely used in various fields, especially in the field of new energy vehicles. Currently, new energy vehicles have brought a significant impact on conventional fuel vehicles. As the core component of new energy vehicles, batteries play a crucial role in the development of new energy vehicles.

Since batteries generate a certain amount of heat during operation, to avoid excessive temperature rise in the batteries, thermally-conductive members are typically provided in the batteries to implement heat exchange for cells in the batteries. Typically, such thermally-conductive member extends along a width direction of a vehicle, so that two end portions of the thermally-conductive member are respectively located on two sides of the vehicle in the width direction of the vehicle. In this case, in the event of collision of the vehicle in a lateral direction, the thermally-conductive member is prone to damage, affecting safety of a battery.

### SUMMARY

In view of the defects in the prior art, this application is intended to provide a battery and an electric device, so as to effectively solve the safety problem in the event of collision of a vehicle in a lateral direction.

A first aspect of this application discloses a battery including:
a thermally-conductive member, where the thermally-conductive member is disposed in a first direction, and the first direction is a length direction of the battery or a moving direction of an electric device with the battery; and
a battery module, where the battery module includes at least one battery cell, and the battery module is disposed in the first direction; where
the battery cell includes a plurality of surfaces, the plurality of surfaces including a first surface with the largest area; and the battery cell is in thermal-conduction connection with the thermally-conductive member at least via the first surface.

For the battery provided in this application, the thermally-conductive member is disposed in the first direction, and the first direction is the length direction of the battery or the moving direction of the electric device with the battery. To be specific, two ends of the thermally-conductive member are respectively disposed at two ends of the battery in the length direction or in the moving direction of the electric device. In the event of collision of the electric device in a lateral direction, an impact force does not directly act on the end of the thermally-conductive member, thereby preventing damage to the thermally-conductive member and guaranteeing safety and reliability of the battery in use. In addition, the battery cell is in thermal-conduction connection with the thermally-conductive member via the first surface, improving heat exchange effect of the thermally-conductive member on the battery cell.

In some embodiments of this application, the first surface intersects with the horizontal plane. The first surface is the surface with the largest area of the battery cell. The first surface intersecting with the horizontal plane can increase the number of battery cells arranged in the horizontal plane to the greatest extent, thus increasing overall energy density of the battery.

In some embodiments of this application, at least two battery modules are included; where in a second direction, two sides of the thermally-conductive member are in thermal-conduction connection with the two battery modules respectively; and the second direction intersects with both the first direction and the first surface. The two sides of the thermally-conductive member are in thermal-conduction connection with the first surfaces of the battery cells, thereby improving the heat exchange effect of the thermally-conductive member on the battery cells.

In some embodiments of this application, at least two battery modules and at least one thermally-conductive member that are arranged along a second direction are included; where one first surface of each battery cell in each battery module is in thermal-conduction connection with one thermally-conductive member; and the second direction intersects with both the first direction and the first surface. One first surface of the battery cell being in thermal-conduction connection with the thermally-conductive member allows for effective heat exchange for the battery cell, while reducing the number of the thermally-conductive members, weight of the battery, and costs of the battery.

In some embodiments of this application, the length direction of the battery is parallel to or intersects with the moving direction of the electric device. The battery in this application may be arranged in any direction in the device, facilitating arrangement of the battery.

In some embodiments of this application, a heat exchange medium channel is provided in the thermally-conductive member. The heat exchange medium channel is used for circulation of a heat exchange medium, so that flow of the heat exchange medium can take away heat emitted by the battery cell or heat up the battery cell, thus improving heat exchange efficiency for the battery cell.

In some embodiments of this application, the battery includes a plurality of thermally-conductive members, where the plurality of thermally-conductive members are arranged along a second direction, and the second direction intersects with both the first direction and the first surface. The plurality of thermally-conductive members are arranged along the second direction, so that they are jointly used for heat exchange for the battery, thus effectively increasing the heat exchange speed for the battery.

In some embodiments of this application, in the second direction, two sides of the battery module are respectively provided with the thermally-conductive members; and the battery module is in thermal-conduction connection with the thermally-conductive members on the two sides. Both sides of the battery module are in thermal-conduction connection with the thermally-conductive members, so that heat exchange is performed on both sides of the battery module, thus effectively increasing the heat exchange speed for the battery.

In some embodiments of this application, in the second direction, the battery cell includes two opposite first surfaces, and the two first surfaces of the battery cell are each in thermal-conduction connection with one of the thermally-conductive members. When the battery cell has two first surfaces with the largest area, heat exchange is performed on both of the two first surfaces, thus effectively increasing the heat exchange speed for the battery.

In some embodiments of this application, the battery cell includes an electrode assembly, the electrode assembly includes a body portion and a tab protruding from the body portion, and the tab is electrically connected to an electrode terminal; and in a second direction, projections of the thermally-conductive member and the body portion at least partially overlap and have an overlapping region, and the second direction intersects with both the first direction and the first surface. The thermally-conductive member and the body portion at least partially overlapping in the second direction can allow for effective heat exchange for the body portion through the thermally-conductive member, thereby improving the heat exchange effect for the battery cell.

In some embodiments of this application, in a third direction, size of the body portion is L1, and size of the thermally-conductive member is L2, where 0.5 ≤ L2/L1 ≤ 1.5, and the first direction, the second direction, and the third direction intersect with each other. The value range of L2/L1 is set to be greater than 0.5 and less than 1.5, to ensure that the thermally-conductive member has a sufficient heat conduction area for performing heat exchange with the body portion, thus greatly improving the heat exchange effect of the thermally-conductive member on the body portion.

In some embodiments of this application, in the third direction, size of the overlapping region is L3, where 0.5 ≤ L3/L1 ≤ 1. Setting of the size of the overlapping region in the third direction allows for reasonable setting of a heat exchange area between the thermally-conductive member and the body portion, thus greatly improving the heat exchange effect of the thermally-conductive member on the body portion.

In some embodiments of this application, the battery further includes a fluid collecting member, where the fluid collecting member is in fluid communication with heat exchange medium channels inside the plurality of thermally-conductive members; where
one end of the thermally-conductive member in the first direction is provided with the fluid collecting member, or two ends of the thermally-conductive member in the first direction are each provided with the fluid collecting member. The fluid collecting member is used for supplying or recovering a heat exchange medium in the heat exchange medium channel, so as to implement heat exchange with the battery. The fluid collecting member is disposed at the end of the thermally-conductive member in the first direction, so that in the event of collision of the electric device in a lateral direction, an impact force does not directly act on the end of the thermally-conductive member, thereby preventing damage to the thermally-conductive member and guaranteeing safety and reliability of the battery in use.

In some embodiments of this application, two fluid collecting members are provided, where the two fluid collecting members are disposed at one end of the thermally-conductive member in the first direction, the two fluid collecting members are arranged along a third direction, and the first direction, the second direction, and the third direction intersect with each other. The two fluid collecting members being disposed together at one end in the first direction and arranged along the third direction can effectively reduce space in the battery occupied by the fluid collecting members in the first direction, thus facilitating provision of other structures in the battery and increasing the energy density of the battery. The two fluid collecting members being disposed together at one end in the first direction can also reduce a probability of damage to the fluid collecting member in the event of collision in the first direction.

In some embodiments of this application, the battery cell includes two second surfaces; where the two second surfaces are disposed opposite each other along a second direction or a third direction; the first direction, the second direction, and the third direction intersect with each other; the battery cell includes an electrode terminal, the electrode terminal being disposed on the second surface; and a surface area of the second surface is smaller than a surface area of the first surface. The electrode terminal is disposed on the second surface, and power is supplied to the electric device through the electrode terminal on the second surface.

In some embodiments of this application, the electrode terminal includes two electrode terminals with opposite polarities, where the two electrode terminals are disposed on one of the second surfaces, or the two electrode terminals are respectively disposed on the two second surfaces. The two electrode terminals with opposite polarities may be disposed on one second surface or two second surfaces respectively of the battery cell as required, so that the electrode terminals avoid the first surface on which heat exchange with the thermally-conductive member occurs, facilitating subsequent electrical connection with another adjacent battery cell.

In some embodiments of this application, the battery cell includes an electrode terminal, where the electrode terminal is disposed on the first surface. The electrode terminal is disposed on the first surface, and power is supplied to the electric device through the electrode terminal on the first surface. The electrode terminal being disposed on the first surface can reduce space in the battery occupied by the electrode terminal in the first direction or third direction, thereby increasing the energy density of the battery.

In some embodiments of this application, the battery cell includes the first surface and a fourth surface opposite the first surface; where the first surface and the fourth surface are disposed opposite each other along a second direction, and the second direction intersects with both the first direction and the first surface; an edge of the fourth surface is provided with a concave portion; the first surface is used for arranging the electrode terminal; and the electrode terminal protrudes from the first surface in the second direction and corresponds to the concave portion. The electrode terminal is disposed on the first surface, and the edge of the fourth surface is provided with the concave portion corresponding to the electrode terminal, so that the electrode terminal of an adjacent battery cell is accommodated in the concave portion, and an operating space for electrical connection is left, allowing for more compact overall structure of the battery and high space utilization.

In some embodiments of this application, the battery cell further includes a pressure relief mechanism; and at least one electrode terminal is provided; where the pressure relief mechanism and the at least one electrode terminal are disposed on one second surface, or the pressure relief mechanism and the electrode terminal are respectively disposed on the two second surfaces. The pressure relief mechanism is in communication with the inside of the battery cell and is configured to discharge internal pressure of the battery cell when the internal pressure of the battery cell increases. The pressure relief mechanism and the electrode terminal may be disposed on one second surface or two second surfaces respectively as required, so that the pressure relief mechanism avoids the first surface on which heat exchange with the thermally-conductive member occurs, facilitating smooth degassing by the pressure relief mechanism when thermal runaway occurs in the battery cell.

In some embodiments of this application, the battery cell further includes a pressure relief mechanism and two third surfaces opposite each other; where the pressure relief mechanism is disposed on at least one of the third surfaces. The pressure relief mechanism is disposed on the third surface, and the electrode terminal is disposed on the second surface, so that the pressure relief mechanism is separated from the electrode terminal, which is conducive to reducing a risk that degassing by the pressure relief mechanism affects the electrode terminal when thermal runaway occurs in the battery cell.

In some embodiments of this application, the battery cell further includes a pressure relief mechanism; where the pressure relief mechanism is disposed on the first surface. The pressure relief mechanism being disposed on the first surface facilitates installation of the battery cell.

In some embodiments of this application, the battery cell includes an electrode assembly; where the electrode assembly is a wound structure and is flat, and an outer surface of the electrode assembly includes two flat surfaces, the two flat surfaces facing each other in a second direction; or
the electrode assembly is a stacked structure, and a first electrode plate, separator and second electrode plate of the electrode assembly are stacked along the second direction; and
the second direction intersects with both the first direction and the first surface. No matter the electrode assembly is arranged as a stacked structure or wound structure, the electrode assembly can effectively supply power to the electric device.

In some embodiments of this application, the battery module includes at least two battery cells, the at least two battery cells being arranged along the first direction. The at least two battery cells are arranged along the first direction, and when heat exchange is needed for the battery cells, the thermally-conductive member can be arranged in the first direction, so as to separately perform heat exchange for the at least two battery cells in the battery module, thereby increasing the heat exchange speed of the thermally-conductive member.

In some embodiments of this application, in the first direction, maximum size of the battery cell is L, and in the second direction, maximum size of the battery cell is D, where a value range of L/D is 1-30. The battery cell being set according to the foregoing size ratio can increase the power of the battery cell to the greatest extent on the basis of guaranteeing support strength of the battery cell.

In some embodiments of this application, in a third direction, maximum size of the battery cell is H, a value range of L/H being 0.5-6; and the first direction, the second direction, and the third direction intersect with each other. The battery cell being set according to the foregoing size ratio can increase the power of the battery cell to the greatest extent on the basis of guaranteeing support strength of the battery cell.

In some embodiments of this application, the electrode terminal is disposed on one second surface; the battery includes a support plate, where the battery cell is fixedly connected to the support plate via the other second surface with no electrode terminal; and the second surface intersects with both the first direction and the horizontal plane. The battery cell is fixed in a box via the support plate, facilitating installation and fixing of the battery cell.

In some embodiments of this application, the other second surface is fixedly connected to the support plate through a first adhesion layer; and the thermally-conductive member is in thermal-conduction connection with the first surface through a second adhesion layer; where a thermal conductivity coefficient of the first adhesion layer is less than or equal to a thermal conductivity coefficient of the second adhesion layer. Since the first adhesion layer is used to connect the second surface and the support plate, and the second adhesion layer is used for thermal-conduction connection between the first surface and the thermally-conductive member, the thermal conductivity coefficient of the first adhesion layer is set to be less than or equal to the thermal conductivity coefficient of the second adhesion layer, so as to ensure more effective heat exchange for the battery cell through the thermally-conductive member.

In some embodiments of this application, a value range of a ratio of the thermal conductivity coefficient of the first adhesion layer to the thermal conductivity coefficient of the second adhesion layer is 0.1-1. A setting based on the above ratio can allow for effective heat exchange for the battery cell through the thermally-conductive member.

A second aspect of this application further proposes an electric device including the battery according to any one of the foregoing embodiments, where the battery is configured to supply electrical energy to drive the electric device to move.

In some embodiments of this application, under a condition that the length direction of the battery is different from the moving direction of the electric device, the first direction is the moving direction of the electric device. The first direction is set as the moving direction of the electric device, so that when heat exchange is needed for the battery cell, the thermally-conductive member can be disposed in the first direction, facilitating heat exchange for the battery cell in the battery module. Because the thermally-conductive member is disposed in the first direction, and the first direction is the moving direction of the electric device with the battery, that is, two ends of the thermally-conductive member are respectively disposed at two ends of the electric device in the moving direction, in the event of collision of the electric device in a lateral direction, an impact force does not directly act on the end of the thermally-conductive member, thereby preventing damage to the thermally-conductive member and guaranteeing safety and reliability of the battery in use.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. Moreover, throughout the accompanying drawings, like reference signs denote like components. In the accompanying drawings:
FIG. 1 is a schematic structural diagram of a vehicle according to an embodiment of this application;
FIG. 2 is a schematic structural exploded view of a battery according to an embodiment of this application;
FIG. 3 is a schematic structural diagram of a battery module according to an embodiment of this application;
FIG. 4 is a schematic structural diagram of a battery cell according to an embodiment of this application;
FIG. 5 is a schematic structural exploded view of a battery cell according to an embodiment of this application;
FIG. 6 is a schematic structural diagram of a battery cell according to an embodiment of this application;
FIG. 7 is a schematic structural diagram of a battery cell according to an embodiment of this application;
FIG. 8 is a schematic structural diagram of a battery cell according to an embodiment of this application;
FIG. 9 is a schematic structural diagram of a battery according to an embodiment of this application;
FIG. 10 is a schematic structural exploded view of a battery according to an embodiment of this application;
FIG. 11 is a schematic structural diagram of a battery module according to an embodiment of this application;
FIG. 12 is a schematic structural diagram of a battery module according to an embodiment of this application;
FIG. 13 is a schematic structural diagram of a battery module according to an embodiment of this application;
FIG. 14 is a schematic structural diagram of a battery cell according to an embodiment of this application;
FIG. 15 is a schematic structural diagram of a battery module according to an embodiment of this application;
FIG. 16 is a schematic structural diagram of a battery cell according to an embodiment of this application;
FIG. 17 is a schematic structural diagram of a battery cell according to an embodiment of this application;
FIG. 18 is a schematic structural diagram of a battery module according to an embodiment of this application;
FIG. 19 is a schematic structural diagram of a battery module according to an embodiment of this application;
FIG. 20 is a schematic structural diagram of a battery cell according to an embodiment of this application;
FIG. 21 is a schematic structural diagram of a thermally-conductive member according to an embodiment of this application;
FIG. 22 is a schematic structural diagram of a second part according to an embodiment of this application;
FIG. 23 is a schematic structural assembly diagram of a second part and a battery module according to an embodiment of this application;
FIG. 24 is a schematic diagram of an enlarged structure of Part A according to an embodiment of this application;
FIG. 25 is a schematic structural cross-sectional view along B-B according to an embodiment of this application;
FIG. 26 is a schematic diagram of an enlarged structure of Part C according to an embodiment of this application;
FIG. 27 is a schematic diagram of an internal structure of a second part according to an embodiment of this application;
FIG. 28 is a schematic diagram of an enlarged structure of Part D according to an embodiment of this application; and
FIG. 29 is a schematic diagram of a distribution structure of a battery in an electric device according to an embodiment of this application.

Reference signs in specific embodiments are described as follows:
1. vehicle;
10. battery; 11. controller; 12. motor;
20. battery module; 21. battery cell; 211. housing; 2111. first surface; 2112. third surface; 212. cover plate; 2121. second surface; 213. electrode assembly; 2131. body portion; 2132. tab; 214. electrode terminal; 215. pressure relief mechanism;
30. box; 31. first part; 311. support plate; 32. second part; 321. baffle plate;
40. thermally-conductive member;
50. fluid collecting member;
61. first adhesion layer; and 62. second adhesion layer.

### DESCRIPTION OF EMBODIMENTS

The following describes in detail embodiments of technical solutions of this application with reference to the accompanying drawings. The following embodiments are merely intended for a clearer description of the technical solutions of this application and therefore are used as just examples which do not constitute any limitations on the protection scope of this application.

It should be noted that, unless otherwise stated, the technical terms or scientific terms used in the embodiments of this application should be in the ordinary meaning as understood by persons skilled in the art to which the embodiments of this application belong.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on embodiments of this application.

In addition, the technical terms "first", "second", and the like are merely for the purpose of description, and shall not be understood as any indication or implication of relative importance or any implicit indication of the number of technical features indicated. In the description of the embodiments of this application, "a plurality of" means at least two unless otherwise specifically stated.

In the description of the embodiments of this application, unless otherwise specified and defined explicitly, the terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, or an internal communication or interaction between two elements. Persons of ordinary skills in the art can understand specific meanings of these terms in the embodiments of this application as appropriate to specific situations.

In the description of the embodiments of the present application, unless otherwise clearly specified and defined, a first feature being "on" or "under" a second feature may mean that the first and second features are in direct contact, or the first and second features are in indirect contact through an intermediary. Moreover, that the first feature is "above", "over", or "on" the second feature may mean that the first feature is directly above or obliquely above the second feature or simply mean that the first feature has a higher level than the second feature. That the first feature is "below", "beneath", and "under" the second feature may mean that the first feature is directly below or obliquely below the second feature or simply mean that the first feature has a lower level than the second feature.

Currently, from the perspective of market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. Lithium-ion batteries have been widely used in mobile and portable electric appliances due to their advantages such as high energy density, high average open circuit voltage, and long cycle life.

The inventors of this application have noted that a thermally-conductive member inside a traction battery in a vehicle generally extends along a width direction of the vehicle, so that two end portions of the thermally-conductive member are respectively located on two sides of the vehicle in the width direction of the vehicle. When the vehicle experiences lateral collision, to be specific, when the vehicle experiences collision in a direction set at an angle with respect to the moving direction, the two ends of the thermally-conductive member are prone to damage under the action of an impact force, leading to damage to the thermally-conductive member, affecting normal use of the battery, and even causing safety hazards.

To solve the problem of damage to the thermally-conductive member due to collision of the vehicle in a lateral direction, the inventors of this application have found through research that when a battery module is disposed in a length direction of the battery or in the moving direction of the electric device with the battery, such that the thermally-conductive member is disposed in the length direction of the battery or in the moving direction of the electric device with the battery, that is, the two ends of the thermally-conductive member are respectively disposed at two ends of the battery in the length direction or in the moving direction of the electric device, in the event of collision of the electric device in a lateral direction, an impact force does not directly act on the end of the thermally-conductive member, thereby preventing damage to the thermally-conductive member and guaranteeing safety and reliability of the battery in use.

Based on the above considerations, the inventors of this application, after in-depth research, have designed a battery including a battery module, where the battery module includes at least one battery cell, and the battery module is disposed in a first direction, the first direction being a length direction of the battery or a moving direction of an electric device with the battery; the battery cell includes a plurality of surfaces, the plurality of surfaces including a first surface with the largest area; the plurality of surfaces further include two second surfaces opposite each other in a second direction, the second direction intersecting with the first direction; and the battery cell further includes an electrode terminal, the electrode terminal being disposed on the first surface or at least one of the second surfaces.

For the battery provided in this application, the battery module is disposed in the first direction, that is, the battery cell in the battery module is disposed in the first direction, so that when heat exchange is needed for the battery cell, the thermally-conductive member can be disposed in the first direction, facilitating heat exchange for the battery cell in the battery module. Because the thermally-conductive member is disposed in the first direction, and the first direction is the length direction of the battery or the moving direction of the electric device with the battery, that is, two ends of the thermally-conductive member are respectively disposed at two ends of the battery in the length direction or at two ends of the electric device in the moving direction, in the event of collision of the electric device in a lateral direction, an impact force does not directly act on the end of the thermally-conductive member, thereby preventing damage to the thermally-conductive member and guaranteeing safety and reliability of the battery in use.

This application provides a battery and an electric device with such battery. Such batteries are applicable to various electric devices that use batteries, for example, mobile phones, portable devices, notebook computers, electric bicycles, electric toys, electric tools, electric vehicles, ships, and spacecrafts. For example, spacecrafts include airplanes, rockets, space shuttles, and spaceships. The batteries are used to provide electrical energy for the above-mentioned electric devices.

It should be understood that the technical solutions described in the embodiments of this application are not only applicable to the batteries and electric devices described above, but also applicable to all batteries including a box and electric devices using batteries. However, for the brevity of description, in the following embodiments, an electric vehicle is used as an example for description.

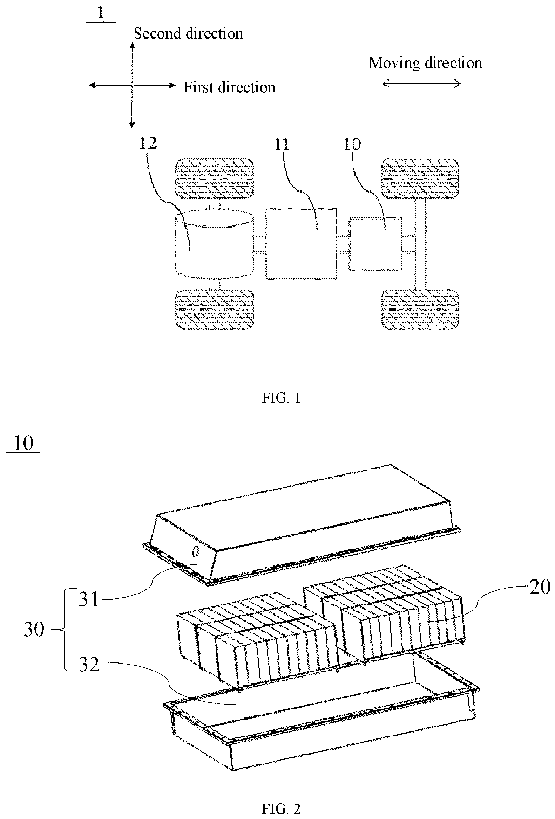

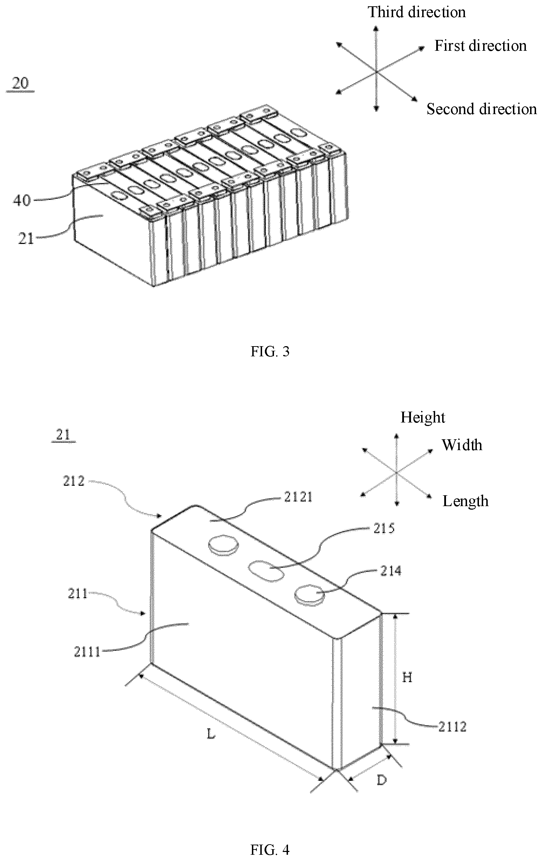

FIG. 1 is a schematic structural diagram of a vehicle 1 according to some embodiments of this application. FIG. 2 is a schematic structural exploded view of a battery 10 according to an embodiment of this application. FIG. 3 is a schematic structural diagram of a battery module 20 according to an embodiment of this application. As shown in FIG. 1 to FIG. 3, the vehicle 1 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1 is provided with a battery 10 inside, where the battery 10 may be disposed at the bottom, front or rear of the vehicle 1. The battery 10 may be configured to supply power to the vehicle 1. For example, the battery 10 may be used as an operational power source for the vehicle 1. The vehicle 1 may further include a controller 11 and a motor 12, where the controller 11 is configured to control the battery 10 to supply power to the motor 12, for example, to satisfy power needs of start, navigation, and driving of the vehicle 1.

In some embodiments of this application, the battery 10 can be used as not only the operational power source for the vehicle 1 but also a driving power source for the vehicle 1, replacing or partially replacing fossil fuel or natural gas to provide driving traction for the vehicle 1.

To meet different requirements for power use, the battery 10 may include a plurality of battery cells 21. A battery cell 21 is a smallest element constituting a battery module 20 or battery pack. A plurality of battery cells 21 can be connected in series and/or in parallel through electrode terminals for various application scenarios. The battery 10 mentioned in this application is a battery pack. The plurality of battery cells 21 may be connected in series, parallel, or series-parallel, where being connected in series-parallel means a combination of series and parallel connections. In the embodiments of this application, the plurality of battery cells 21 may be directly combined into a battery pack, or they may be first combined into battery modules 20 which are then combined into a battery pack.

As shown in FIG. 2 and FIG. 3, the battery 10 may include a plurality of battery modules 20 and a box 30. The plurality of battery modules 20 are accommodated in the box 30. The box 30 is configured to accommodate the battery cells 21 or the battery modules 20 to prevent liquids or other foreign matter from affecting charging or discharging of the battery cells 21. The box 30 may be a simple three-dimensional structure such as a rectangular, cylindrical, or spherical structure or may be a complex three-dimensional structure combining simple three-dimensional structures such as rectangular, cylindrical, or spherical structures. This is not limited in the embodiments of this application. The box 30 may be made of an alloy material such as an aluminum alloy or iron alloy, a polymer material such as polycarbonate or polyisocyanurate foam, or a composite material produced from materials such as glass fiber and epoxy resin. This is not limited in the embodiments of this application either.

In some implementations, the box 30 may include a first part 31 and a second part 32. The first part 31 and the second part 32 fit together so that the first part 31 and the second part 32 jointly define a space for accommodating the battery cell 21. The second part 32 may be a hollow structure with one end open, and the first part 31 may be a plate structure, where the first part 31 covers the open side of the second part 32 for the first part 31 and the second part 32 to jointly define a space for accommodating the battery cell 21; or alternatively, the first part 31 and the second part 32 may both be hollow structures with one side open, where the open side of the first part 31 is engaged with the open side of the second part 32.

The battery module 20 may include a plurality of battery cells 21, where the plurality of battery cells 21 may be connected in series, parallel, or series-parallel to form a battery module 20 first, and then a plurality of battery modules 20 are connected in series, parallel, or series-parallel to form a battery 10. The battery cell 21 may be cylindrical, flat, cuboid, or of other shapes. This is not limited in the embodiments of this application either. The battery cell 21 typically includes a cylindrical cell, a prismatic cell, a pouch cell, a cell with multi-prismatic cross section, and the like. This is not limited in the embodiments of this application either. However, for the brevity of description, the following embodiments are all described by taking a prismatic lithium-ion battery cell 21 as an example.

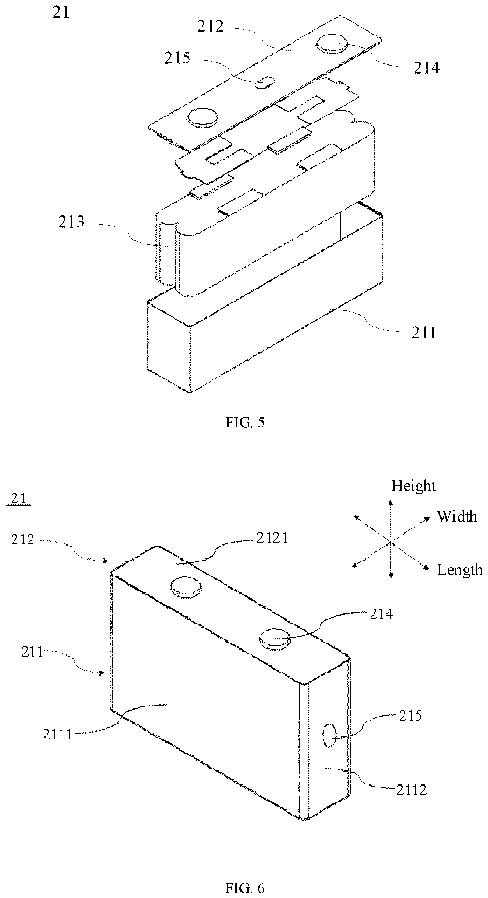

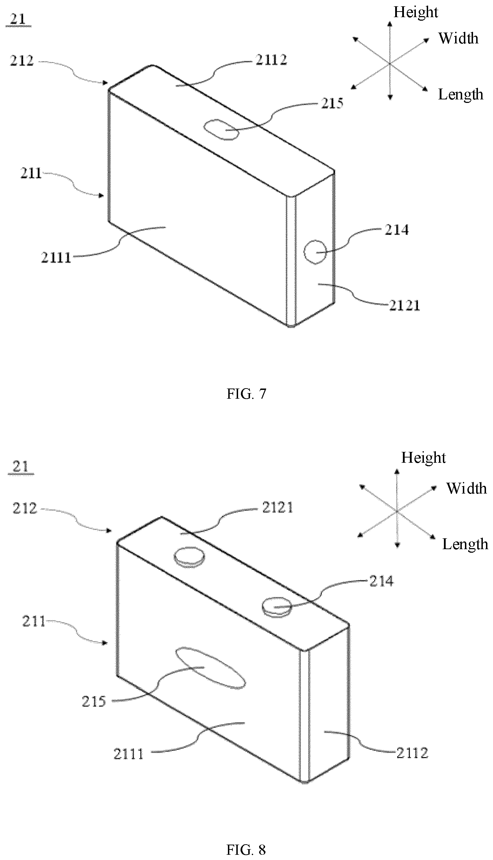

FIG. 4 is a schematic structural diagram of a battery cell 21 according to an embodiment of this application. FIG. 5 is a schematic structural exploded view of a battery cell 21 according to an embodiment of this application. FIG. 6 is a schematic structural diagram of a battery cell according to an embodiment of this application. FIG. 7 is a schematic structural diagram of a battery cell according to an embodiment of this application. FIG. 8 is a schematic structural diagram of a battery cell according to an embodiment of this application. The battery cell 21 refers to a smallest element constituting a battery 10. As shown in FIG. 4 to FIG. 8, the battery cell 21 includes an end cover 212, a housing 211, and an electrode assembly 213.

The end cover 212 refers to a component that covers an opening of the housing 211 to isolate an internal environment of the battery cell 21 from an external environment. A shape of the end cover 212 is not limited and may be adapted to a shape of the housing 211 to fit the housing 211. Optionally, the end cover 212 may be made of a material with certain hardness and strength (for example, aluminum alloy), so that the end cover 212 is less likely to deform when subjected to extrusion and collision, allowing the battery cell 21 to have higher structural strength and improved safety performance. Functional components such as an electrode terminal 214 may be provided on the end cover 212. The electrode terminal 214 may be configured to be electrically connected to the electrode assembly 213 for outputting or inputting electrical energy of the battery cell 21. In some embodiments, the end cover 212 may further be provided with a pressure relief mechanism for releasing internal pressure when the internal pressure or a temperature of the battery cell 21 reaches a threshold. In some embodiments, an insulator may also be provided on an inner side of the end cover 212. The insulator may be configured to isolate an electrically connected component in the housing 211 from the end cover 212 to reduce a risk of short circuit. For example, the insulator may be made of plastic, rubber, or the like.

The housing 211 is an assembly configured to cooperate with the end cover 212 to form an internal environment of the battery cell 21, where the formed internal environment can be configured to accommodate the electrode assembly 213, an electrolyte (not shown in the figure), and other components. The housing 211 and the end cover 212 may be separate components, an opening may be provided in the housing 211, and the end cover 212 covers the opening to form the internal environment of the battery cell 21. The end cover 212 and the housing 211 are not limited and may also be integrated. Specifically, the end cover 212 and the housing 211 may form a shared connection surface before other components are disposed in the housing, and then the housing 211 is covered with the end cover 212 when inside of the housing 211 needs to be enclosed. The housing 211 may be of various shapes and sizes, such as a cuboid shape, a cylindrical shape, and a hexagonal prism shape. Specifically, a shape of the housing 211 may be determined according to a specific shape and size of the electrode assembly 213. The housing 211 may be made of various materials, such as copper, iron, aluminum, stainless steel, aluminum alloy, and plastic, which are not particularly limited in the embodiments of this application.

The electrode assembly 213 is a component in which electrochemical reactions take place in the battery cell 21. The housing 211 may include one or more electrode assemblies 213. The electrode assembly 213 is mainly formed by winding or stacking a positive electrode plate and a negative electrode plate, and a separator is generally disposed between the positive electrode plate and the negative electrode plate. Parts of the positive electrode plate and the negative electrode plate with active materials constitute a body portion of the electrode assembly 213, while parts of the positive electrode plate and the negative electrode plate without active materials separately constitute a tab (not shown in the figure). A positive electrode tab and a negative electrode tab may both be located at one end of the body portion or be located at two ends of the body portion respectively. During charge and discharge of the battery, a positive electrode active material and a negative electrode active material react with the electrolyte, and the tabs are connected to the electrode terminals 214 to form a current loop.

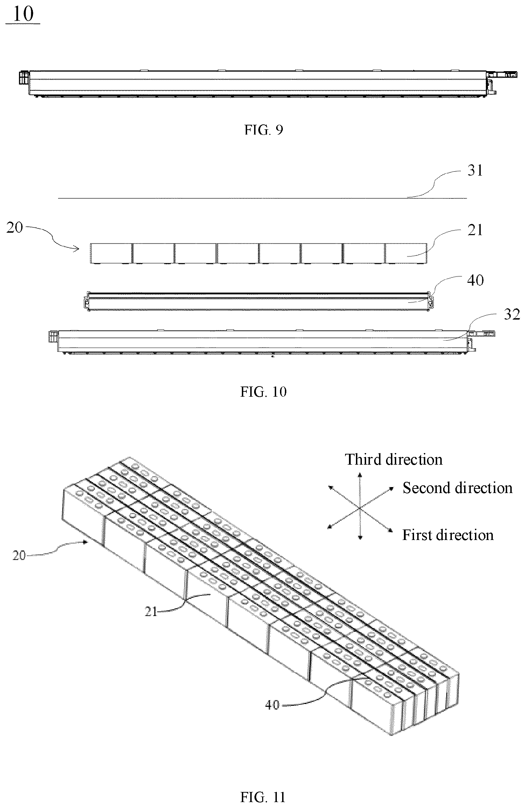

FIG. 9 is a schematic structural diagram of a battery 10 according to an embodiment of this application. FIG. 10 is a schematic structural exploded view of a battery 10 according to an embodiment of this application. FIG. 11 is a schematic structural diagram of a battery module 20 according to an embodiment of this application. As shown in FIG. 1 and FIG. 4 to FIG. 11, in some embodiments of this application, the battery 10 includes a thermally-conductive member 40 and a battery module 20, where the thermally -conductive member 40 is disposed in a first direction, and the first direction is a length direction of the battery 10 or a moving direction of the electric device 1 with the battery 10; the battery module 20 includes at least one battery cell 21, and the battery module 20 is disposed in the first direction; the battery cell 21 includes a plurality of surfaces, the plurality of surfaces including a first surface 2111 with the largest area; and the battery cell 21 is in thermal-conduction connection with the thermally-conductive member 40 at least via the first surface 2111.

Specifically, as shown in FIG. 1, FIG. 4, FIG. 10, and FIG. 11, in some embodiments of this application, the battery cell 21 may be a rectangular battery cell 21, and the battery cell 21 includes two first surfaces 2111 opposite each other in a second direction. The thermally-conductive member 40 can be in thermal-conduction connection with the battery cell 21 via the first surface 2111, and heat of the battery cell 21 can be conducted to the thermally-conductive member 40, implementing heat exchange for the battery cell 21. The heat exchange for the battery cell 21 includes cooling and heat dissipation of the battery cell 21 or heating up of the battery cell 21. The thermally-conductive member 40 may be a thermally-conductive plate, a thermally-conductive adhesive, or another thermally-conductive structure, and in some embodiments, the thermally-conductive member 40 may also be provided with a cavity inside. In some embodiments of this application, the thermally-conductive member 40 is disposed in the first direction and attached to the first surface 2111, where the thermally-conductive member 40 is a thermally-conductive plate. The thermally-conductive plate may be a metal plate, for example, a copper plate or an aluminum plate, or be made of another material with good thermal conductivity. The first direction is the length direction of the battery 10 or the moving direction of the electric device 1, and the second direction is a width direction of the battery 10 or a lateral direction of the electric device 1.

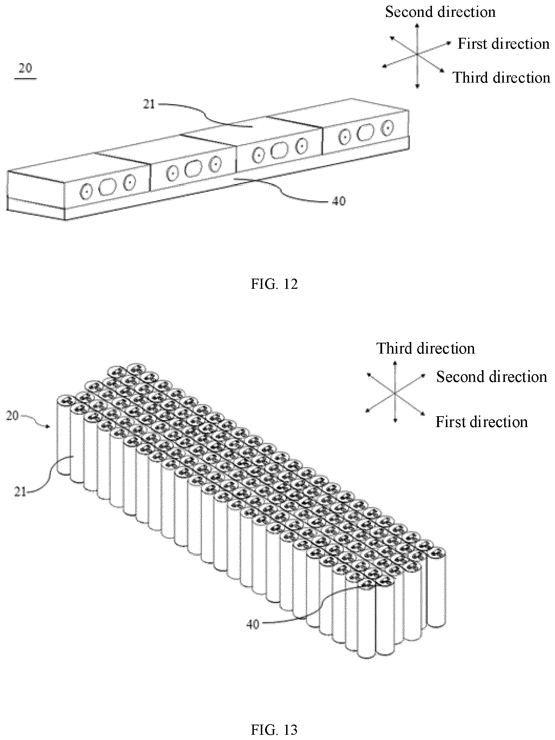

FIG. 12 is a schematic structural diagram of a battery module 20 according to an embodiment of this application. As shown in FIG. 1, FIG. 4, FIG. 10, and FIG. 12, in some embodiments of this application, the battery cell 21 may be a rectangular battery cell 21, the battery cell 21 includes two first surfaces 2111 opposite each other in a second direction, and the thermally-conductive member 40 is in thermal-conduction connection with the first surface 2111. The first direction is the length direction of the battery 10 or the moving direction of the electric device 1, and the second direction is the vertical direction.

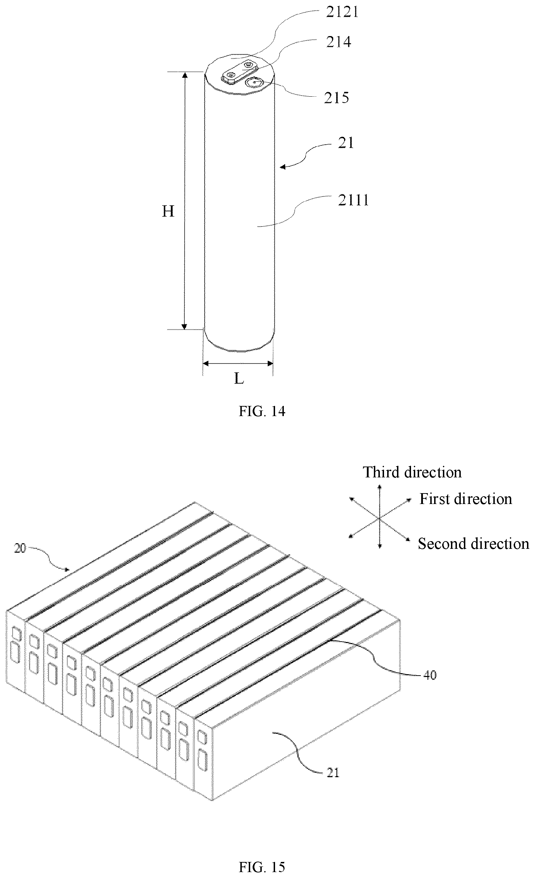

FIG. 13 is a schematic structural diagram of a battery module 20 according to an embodiment of this application. FIG. 14 is a schematic structural diagram of a battery cell 21 according to an embodiment of this application. As shown in FIG. 1, FIG. 10, FIG. 13, and FIG. 14, in some embodiments of this application, the battery cell 21 may be a cylindrical battery cell 21, the battery cell 21 includes a cylindrical first surface 2111, and the thermally-conductive member 40 is in thermal-conduction connection with the first surface 2111. The first direction is the length direction of the battery 10 or the moving direction of the electric device 1, and the second direction is a width direction of the battery 10 or a lateral direction of the electric device 1.

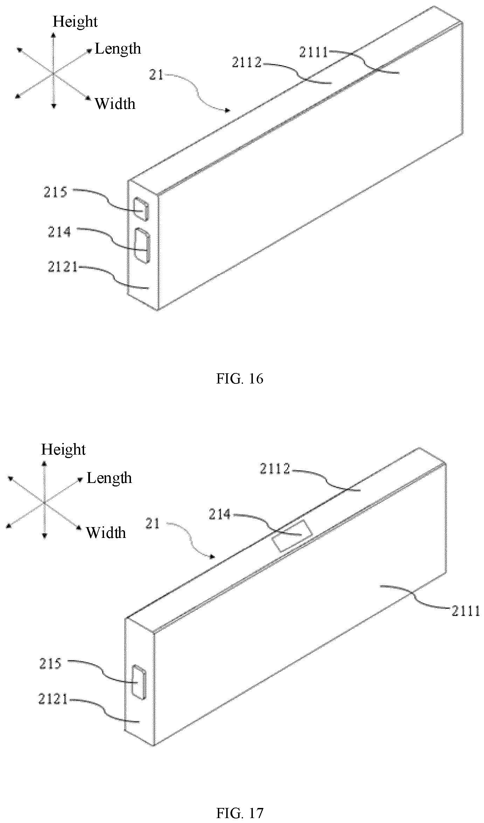

FIG. 15 is a schematic structural diagram of a battery module according to an embodiment of this application. FIG. 16 is a schematic structural diagram of a battery cell according to an embodiment of this application. FIG. 17 is a schematic structural diagram of a battery cell according to an embodiment of this application. As shown in FIG. 1, FIG. 10, and FIG. 15 to FIG. 17, in some embodiments of this application, the battery cell 21 may be a rectangular battery cell 21, the battery cell 21 includes two first surfaces 2111 opposite each other in a second direction, and the thermally-conductive member 40 is in thermal-conduction connection with the first surface 2111. The first direction is the length direction of the battery 10 or the moving direction of the electric device 1, and the second direction is a width direction of the battery 10 or a lateral direction of the electric device 1.

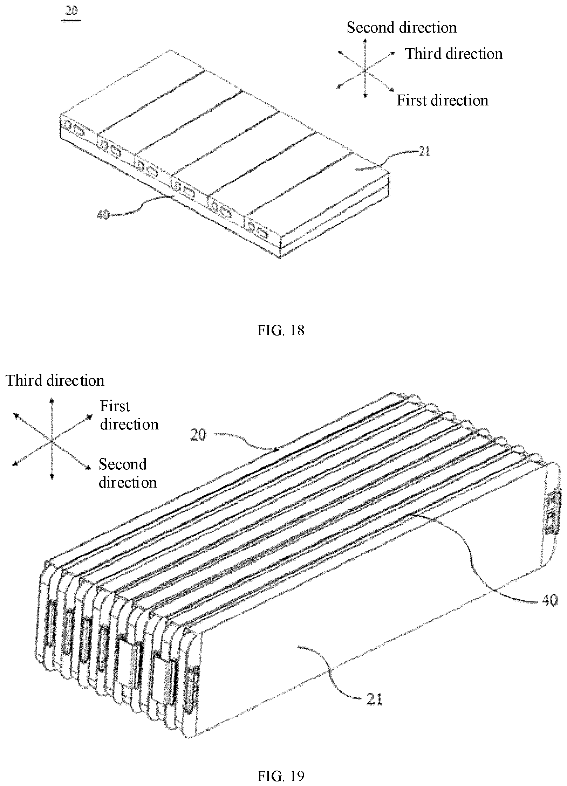

FIG. 18 is a schematic structural diagram of a battery module according to an embodiment of this application. As shown in FIG. 1, FIG. 10, FIG. 16, and FIG. 18, in some embodiments of this application, the battery cell 21 may be a rectangular battery cell 21, the battery cell 21 includes two first surfaces 2111 opposite each other in a second direction, and the thermally-conductive member 40 is in thermal-conduction connection with the first surface 2111. The first direction is the length direction of the battery 10 or the moving direction of the electric device 1, and the second direction is the vertical direction.

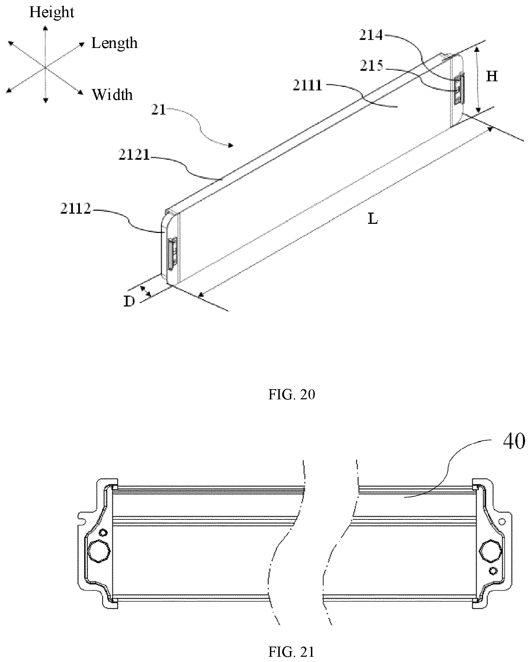

FIG. 19 is a schematic structural diagram of a battery module according to an embodiment of this application. FIG. 20 is a schematic structural diagram of a battery cell according to an embodiment of this application. As shown in FIG. 1, FIG. 10, FIG. 19, and FIG. 20, the battery cell 21 may be a rectangular battery cell 21, the battery cell 21 includes two first surfaces 2111 opposite each other in a second direction, and the thermally-conductive member 40 is in thermal-conduction connection with the first surface 2111. The first direction is the length direction of the battery 10 or the moving direction of the electric device 1, and the second direction is a width direction of the battery 10 or a lateral direction of the electric device 1.

For the battery 10 provided in this application, the thermally-conductive member 40 is disposed in the first direction, and the first direction is the length direction of the battery 40 or the moving direction of the electric device 1 with the battery 10. To be specific, two ends of the thermally-conductive member 40 are respectively disposed at two ends of the battery 10 in the length direction or in the moving direction of the electric device 1. In the event of collision of the electric device 1 in the lateral direction, an impact force does not directly act on the end of the thermally-conductive member 40, thereby preventing damage to the thermally-conductive member 40 and guaranteeing safety and reliability of the battery 10 in use. In addition, the battery cell 21 is in thermal-conduction connection with the thermally-conductive member 40 via the first surface 2111, improving heat exchange effect of the thermally-conductive member 40 on the battery cell 21.

As shown in FIG. 4 and FIG. 11, in some embodiments of this application, the first surface 2111 intersects with the horizontal plane.

Specifically, in some embodiments of this application, the first surface 2111 may be arranged in the vertical direction.

As shown in FIG. 13 and FIG. 14, in some embodiments of this application, the first surface 2111 intersects with the horizontal plane.

As shown in FIG. 15 and FIG. 16, in some embodiments of this application, the first surface 2111 intersects with the horizontal plane.

As shown in FIG. 19 and FIG. 20, in some embodiments of this application, the first surface 2111 intersects with the horizontal plane.

Since the first surface 2111 is the surface with the largest area of the battery cell 21, the first surface 2111 intersecting with the horizontal plane can increase the number of battery cells 21 arranged in the horizontal plane to the greatest extent, thus increasing overall energy density of the battery 10.

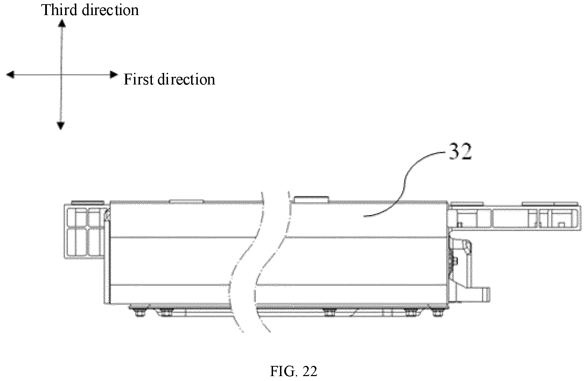

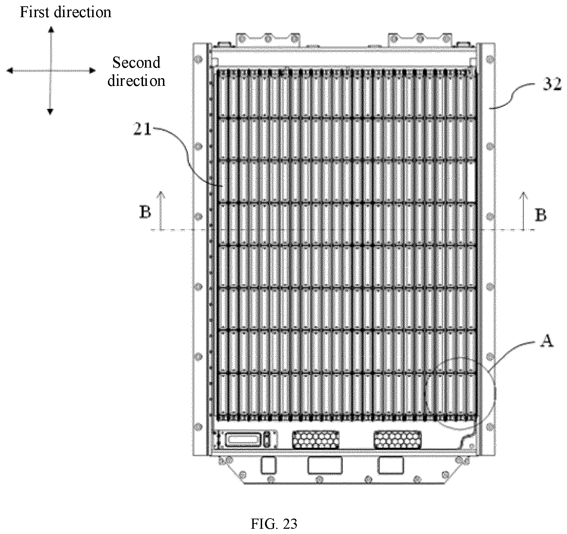

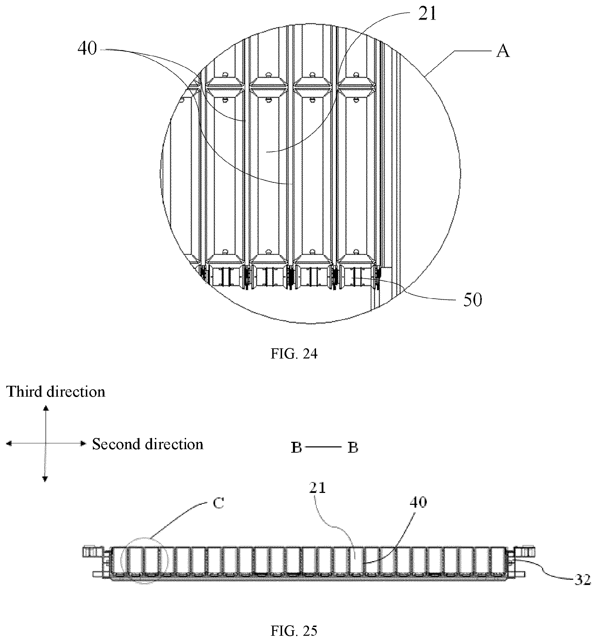

FIG. 21 is a schematic structural diagram of a thermally-conductive member 40 according to an embodiment of this application. FIG. 22 is a schematic structural diagram of a second part 32 according to an embodiment of this application. FIG. 23 is a schematic structural assembly diagram of a second part 32 and a battery module 20 according to an embodiment of this application. FIG. 24 is a schematic diagram of an enlarged structure of Part A according to an embodiment of this application. As shown in FIG. 4, FIG. 11, FIG. 21, FIG. 22, FIG. 23, and FIG. 24, in some embodiments of this application, the battery 10 includes at least two battery modules 20; where in a second direction, two sides of the thermally-conductive member 40 are in thermal-conduction connection with the two battery modules 20 respectively; and the second direction intersects with both the first direction and the first surface 2111.

Specifically, the thermally-conductive member 40 is disposed between the two battery modules 20 and is in thermal-conduction connection with both of the two battery modules 20. The second direction is the width direction of the battery 10 or a lateral direction of the moving direction of the electric device 1.

As shown in FIG. 13, FIG. 14, FIG. 21, FIG. 22, FIG. 23, and FIG. 24, in some embodiments of this application, the battery 10 includes at least two battery modules 20; where in a second direction, two sides of the thermally-conductive member 40 are in thermal-conduction connection with the two battery modules 20 respectively; and the second direction intersects with both the first direction and the first surface 2111.

As shown in FIG. 15, FIG. 16, FIG. 21, FIG. 22, FIG. 23, and FIG. 24, in some embodiments of this application, the battery 10 includes at least two battery modules 20; where in a second direction, two sides of the thermally-conductive member 40 are in thermal-conduction connection with the two battery modules 20 respectively; and the second direction intersects with both the first direction and the first surface 2111.

As shown in FIG. 19, FIG. 20, FIG. 21, FIG. 22, FIG. 23, and FIG. 24, in some embodiments of this application, the battery 10 includes at least two battery modules 20; where in a second direction, two sides of the thermally-conductive member 40 are in thermal-conduction connection with the two battery modules 20 respectively; and the second direction intersects with both the first direction and the first surface 2111.

The two sides of the thermally-conductive member 40 are in thermal-conduction connection with the first surfaces 2111 of the battery cells 21, thereby improving the heat exchange effect of the thermally-conductive member 40 on the battery cells 21.

As shown in FIG. 1, FIG. 4, and FIG. 11, in some embodiments of this application, the battery 10 includes at least two battery modules 20 and at least one thermally-conductive member 40 that are arranged along a second direction; where one first surface 2111 of each battery cell 21 in each battery module 20 is in thermal-conduction connection with one thermally-conductive member 40; and the second direction intersects with both the first direction and the first surface. One first surface 2111 of the battery cell 21 being in thermal-conduction connection with the thermally-conductive member 40 allows for effective heat exchange for the battery cell 21, while reducing the number of thermally-conductive members 40, weight of the battery 10, and costs of the battery 10.

As shown in FIG. 1 and FIG. 23, in some embodiments of this application, the length direction of the battery 10 is parallel to or intersects with the moving direction of the electric device 1.

Specifically, in some embodiments of this application, the length direction of the battery 10 may be set to be parallel to the moving direction of the electric device 1, such that when the thermally-conductive member 40 is disposed in the length direction of the battery 10, the two ends of the thermally-conductive member 40 are respectively disposed at two ends of the battery 10 in the length direction, that is, respectively disposed at two ends of the electric device 1 in the moving direction. In the event of collision of the electric device 1 in a lateral direction, an impact force does not directly act on the end of the thermally-conductive member 40, thereby preventing damage to the thermally-conductive member 40 and guaranteeing safety and reliability of the battery 10 in use.

In some embodiments of this application, the length direction of the battery 10 may alternatively be set at an included angle with the moving direction of the electric device 1, and the battery 10 can also supply power to the electric device 1, thus facilitating arrangement of position of the battery 10.

As shown in FIG. 21 to FIG. 24, in some embodiments of this application, a heat exchange medium channel is provided in the thermally-conductive member 40.

The heat exchange medium channel is used for circulation of heat exchange medium, so that flow of the heat exchange medium can take away heat emitted by the battery cell 21 or heat up the battery cell 21, thus improving heat exchange efficiency for the battery cell 21. The heat exchange medium may be heat exchange fluid, specifically oil or water-based fluid.

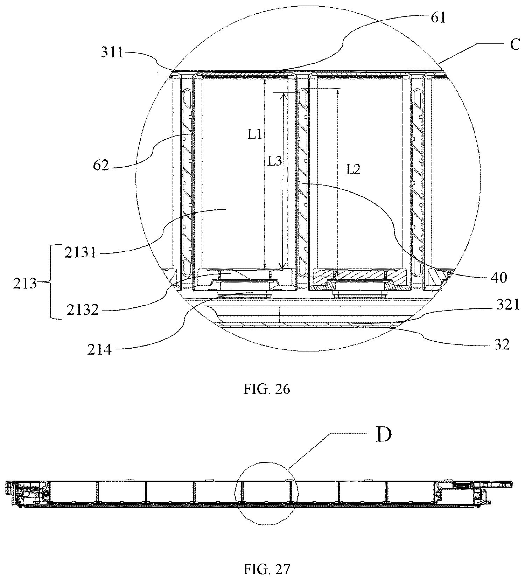

FIG. 25 is a schematic structural cross-sectional view along B-B according to an embodiment of this application. FIG. 26 is a schematic diagram of an enlarged structure of Part C according to an embodiment of this application. As shown in FIG. 4, FIG. 11, FIG. 23, FIG. 24, FIG. 25, and FIG. 26, in some embodiments of this application, the battery 10 includes a plurality of thermally-conductive members 40, where the plurality of thermally-conductive members 40 are arranged along a second direction, and the second direction intersects with both the first direction and the first surface 2111.

As shown in FIG. 13, FIG. 14, FIG. 23, FIG. 24, FIG. 25, and FIG. 26, in some embodiments of this application, the battery 10 includes a plurality of thermally-conductive members 40, where the plurality of thermally-conductive members 40 are arranged along a second direction, and the second direction intersects with both the first direction and the first surface 2111.

As shown in FIG. 15, FIG. 16, FIG. 23, FIG. 24, FIG. 25, and FIG. 26, in some embodiments of this application, the battery 10 includes a plurality of thermally-conductive members 40, where the plurality of thermally-conductive members 40 are arranged along a second direction, and the second direction intersects with both the first direction and the first surface 2111.

As shown in FIG. 19, FIG. 20, FIG. 23, FIG. 24, FIG. 25, and FIG. 26, in some embodiments of this application, the battery 10 includes a plurality of thermally-conductive members 40, where the plurality of thermally-conductive members 40 are arranged along a second direction, and the second direction intersects with both the first direction and the first surface 2111.

The plurality of thermally-conductive members 40 are arranged along a third direction, and the plurality of thermally-conductive members 40 are separately in thermal-conduction connection with the first surfaces 2111 of the battery cells 21, so that they are jointly used for heat exchange for the battery 10, thus effectively increasing the heat exchange speed for the battery 10.

As shown in FIG. 4, FIG. 11, FIG. 23, FIG. 24, FIG. 25, and FIG. 26, in some embodiments of this application, in the second direction, two sides of the battery module 20 are respectively provided with the thermally-conductive members 40; and the battery module 20 is in thermal-conduction connection with the thermally-conductive members 40 on the two sides.

As shown in FIG. 13, FIG. 14, FIG. 23, FIG. 24, FIG. 25, and FIG. 26, in some embodiments of this application, in the second direction, two sides of the battery module 20 are respectively provided with the thermally-conductive members 40; and the battery module 20 is in thermal-conduction connection with the thermally-conductive members 40 on the two sides.

As shown in FIG. 15, FIG. 16, FIG. 23, FIG. 24, FIG. 25, and FIG. 26, in some embodiments of this application, in the second direction, two sides of the battery module 20 are respectively provided with the thermally-conductive members 40; and the battery module 20 is in thermal-conduction connection with the thermally-conductive members 40 on the two sides.

As shown in FIG. 19, FIG. 20, FIG. 23, FIG. 24, FIG. 25, and FIG. 26, in some embodiments of this application, in the second direction, two sides of the battery module 20 are respectively provided with the thermally-conductive members 40; and the battery module 20 is in thermal-conduction connection with the thermally-conductive members 40 on the two sides.

Both sides of the battery module 20 are in thermal-conduction connection with the thermally-conductive members 40, so that heat exchange is performed on both sides of the battery module 20, thus effectively increasing the heat exchange speed for the battery 1.

As shown in FIG. 4, FIG. 11, FIG. 23, FIG. 24, FIG. 25, and FIG. 26, in some embodiments of this application, in the second direction, the battery cell 21 includes two opposite first surfaces 2111, and the two first surfaces 2111 of the battery cell 21 are each in thermal-conduction connection with one of the thermally-conductive members 40.

As shown in FIG. 15, FIG. 16, FIG. 23, FIG. 24, FIG. 25, and FIG. 26, in some embodiments of this application, in the second direction, the battery cell 21 includes two opposite first surfaces 2111, and the two first surfaces 2111 of the battery cell 21 are each in thermal-conduction connection with one of the thermally-conductive members 40.

When the battery cell 21 has two first surfaces 2111 with the largest area, heat exchange is performed on both of the two first surfaces 2111, thus effectively increasing the heat exchange speed for the battery 10.

As shown in FIG. 4, FIG. 5, FIG. 11, FIG. 25, and FIG. 26, in some embodiments of this application, the battery cell 21 includes an electrode assembly 213, the electrode assembly 213 includes a body portion and a tab protruding from the body portion, and the tab is electrically connected to an electrode terminal 214; and in a second direction, projections of the thermally-conductive member 40 and the body portion at least partially overlap, and the second direction intersects with both the first direction and the first surface 2111.

Specifically, the thermally-conductive member 40 extends along the first direction and is disposed on a side of the battery cell 21 in the second direction. The first direction is a length direction of the battery cell 21, and the second direction is a width direction of the battery cell 21.

As shown in FIG. 13, FIG. 14, FIG. 25, and FIG. 26, in some embodiments of this application, the battery cell 21 includes an electrode assembly 213, the electrode assembly 213 includes a body portion 2131 and a tab 2132 protruding from the body portion 2131, and the tab 2132 is electrically connected to an electrode terminal 214; and in a second direction, projections of the thermally-conductive member 40 and the body portion 2131 at least partially overlap, and the second direction intersects with both the first direction and the first surface 2111.

Specifically, the thermally-conductive member 40 extends along the first direction and is disposed on a side of the battery cell 21 in the second direction. The first direction is the moving direction of the electric device 1, and the second direction is a radial direction of the battery cell 21.

As shown in FIG. 15, FIG. 16, FIG. 25, and FIG. 26, in some embodiments of this application, the battery cell 21 includes an electrode assembly 213, the electrode assembly 213 includes a body portion 2131 and a tab 2132 protruding from the body portion 2131, and the tab 2132 is electrically connected to an electrode terminal 214; and in a second direction, projections of the thermally-conductive member 40 and the body portion 2131 at least partially overlap, and the second direction intersects with both the first direction and the first surface 2111.

Specifically, the thermally-conductive member 40 extends along the first direction and is disposed on a side of the battery cell 21 in the second direction. The first direction is the moving direction of the electric device 1, and the second direction is a lateral direction of the electric device 1.

As shown in FIG. 19, FIG. 20, FIG. 25, and FIG. 26, in some embodiments of this application, the battery cell 21 includes an electrode assembly 213, the electrode assembly 213 includes a body portion 2131 and a tab 2132 protruding from the body portion 2131, and the tab 2132 is electrically connected to an electrode terminal 214; and in a second direction, projections of the thermally-conductive member 40 and the body portion 2131 at least partially overlap, and the second direction intersects with both the first direction and the first surface 2111.

Specifically, the thermally-conductive member 40 extends along the first direction and is disposed on a side of the battery cell 21 in the second direction. The first direction is the moving direction of the electric device 1, and the second direction is a lateral direction of the electric device 1.

The thermally-conductive member 40 and the body portion 2131 at least partially overlapping in the second direction can allow for effective heat exchange for the body portion 2131 through the thermally-conductive member 40, thereby improving the heat exchange effect for the battery cell 10.

As shown in FIG. 4, FIG. 5, FIG. 11, FIG. 25, and FIG. 26, in some embodiments of this application, in a third direction, size of the body portion 2131 is L1, and size of the thermally-conductive member 40 is L2, where 0.5 ≤ L2/L1 ≤ 1.5, and the first direction, the second direction, and the third direction intersect with each other.

Specifically, the first direction is the length direction of the battery cell 21, and the third direction is a height direction of the battery cell 21.

As shown in FIG. 13, FIG. 14, FIG. 25, and FIG. 26, in some embodiments of this application, in a third direction, size of the body portion 2131 is L1, and size of the thermally-conductive member 40 is L2, where 0.5 ≤ L2/L1 ≤ 1.5, and the first direction, the second direction, and the third direction intersect with each other.

Specifically, the first direction is the moving direction of the electric device 1, and the third direction is a height direction of the battery cell 21.

As shown in FIG. 19, FIG. 20, FIG. 25, and FIG. 26, in some embodiments of this application, in a third direction, size of the body portion 2131 is L1, and size of the thermally-conductive member 40 is L2, where 0.5 ≤ L2/L1 ≤ 1.5, and the first direction, the second direction, and the third direction intersect with each other.

Specifically, the first direction is the moving direction of the electric device 1, and the third direction is a height direction of the battery cell 21.

The value range of L2/L1 is set to be greater than 0.5 and less than 1.5, to ensure that the thermally-conductive member 40 has a sufficient heat conduction area for performing heat exchange with the body portion 2131, thus greatly improving the heat exchange effect of the thermally-conductive member 40 on the body portion 2131.

It should be understood that when L2/L1 is less than 0.5, the size of the thermally-conductive member 40 is too small for effective heat exchange for the battery cell 21; and when L2/L1 is greater than 1.5, the thermally-conductive member 40 is has a relatively large size, prone to occupying space of the battery 10, which is not conducive to improving the space utilization of the battery 10.

It should be noted that in some embodiments of this application, the value of L2/L1 may be 0.5, 0.6, 0.7, 0.8, 0.9, 1.0, 1.1, 1.2, 1.3, 1.4, ..., or 1.5.

As shown in FIG. 4, FIG. 5, FIG. 11, FIG. 25, and FIG. 26, in some embodiments of this application, in the second direction, size of an overlapping region is L3, where 0.5 ≤ L3/L1 ≤ 1.

Setting of the size of the overlapping region in the second direction allows for reasonable setting of a heat exchange area between the thermally-conductive member 40 and the body portion 2131, thus greatly improving the heat exchange effect of the thermally-conductive member 40 on the body portion 2131.

It should be understood that when L3/L1 is less than 0.5, the overlapping area between the thermally-conductive member 40 and the body portion 2131 is too small, leading to weakened heat exchange effect of the thermally-conductive member 40 on the battery cell 21 and making it impossible to guarantee heat dissipation for the battery cell 21.

It should be noted that in some embodiments of this application, the value of L3/L1 may be 0.5, 0.6, 0.7, 0.8, 0.9, ..., or 1.

As shown in FIG. 23 and FIG. 24, in some embodiments of this application, the battery 10 further includes a fluid collecting member 50, where the fluid collecting member 50 is in fluid communication with the plurality of thermally-conductive members 40.

One end of the thermally-conductive member 40 in the first direction is provided with the fluid collecting member 50, or two ends of the thermally-conductive member 40 in the first direction are each provided with the fluid collecting member 50. The fluid collecting member 50 is used for supplying or recovering a heat exchange medium in the heat exchange medium channel, so as to implement heat exchange with the battery 10.

Specifically, since the plurality of thermally-conductive members 40 are arranged along the length direction of the battery 10 or the moving direction of the electric device 1, to facilitate fluid communication with the plurality of thermally-conductive members 40 through the fluid collecting member 50, the fluid collecting member 50 is disposed at one end of the battery 10 in the length direction or at an end of the electric device 1 in the moving direction, and the fluid collecting member 50 is disposed at one end or both ends based on actual needs.

The fluid collecting member 50 is disposed at the end of the thermally-conductive member 40 in the first direction, so that in the event of collision of the electric device 1 in a lateral direction, an impact force does not directly act on the fluid collecting member 50 at the end of the electric device 1 in the moving direction, thereby preventing damage to the fluid collecting member 50 and guaranteeing safety and reliability of the battery 10 in use.

As shown in FIG. 23 and FIG. 24, in some embodiments of this application, two fluid collecting members 50 are provided, where the two fluid collecting members 50 are disposed at one end of the thermally-conductive member 40 in the first direction, the two fluid collecting members 50 are arranged along a third direction, and the third direction intersects with both the first direction and the horizontal plane.

Specifically, in some embodiments of this application, the third direction may be the vertical direction, that is, the two fluid collecting members 50 are apart from each other along the vertical direction. The two fluid collecting members 50 may be inlet fluid collecting member and outlet fluid collecting member respectively.

The two fluid collecting members 50 being disposed together at one end in the first direction and arranged along the third direction can effectively reduce space in the battery 10 occupied by the fluid collecting members 50 in the first direction, thus facilitating provision of other structures in the battery 10 and increasing the energy density of the battery 10. The two fluid collecting members 50 being disposed together at one end in the first direction can also reduce a probability of damage to the fluid collecting member in the event of collision in the first direction.

As shown in FIG. 1, FIG. 4, and FIG. 11, in some embodiments of this application, the battery cell 21 includes two second surfaces 2121; where the two second surfaces 2121 are disposed opposite each other along a second direction or a third direction; the first direction, the second direction, and the third direction intersect with each other; the battery cell 21 includes an electrode terminal 214, the electrode terminal 214 being disposed on the second surface 2121; and a surface area of the second surface 214 is smaller than a surface area of the first surface 2111.

Specifically, as shown in FIG. 1, FIG. 4, and FIG. 11, in some embodiments of this application, the battery cell 21 may include two first surfaces 2111 opposite each other in the second direction and two second surfaces 2121 opposite each other in the third direction, where the second surface 2121 is provided with an electrode terminal 214. The second direction is a lateral direction of the electric device 1, and the third direction is the vertical direction. In some embodiments of this application, the vertical direction may alternatively be set as the second direction, and the lateral direction of the electric device 1 may be set as the third direction, that is, the two second surfaces 2121 are arranged in the second direction, and the second surface 2121 is provided with the electrode terminal 214.

The electrode terminal 214 is disposed on the second surface 2121, and power is supplied to the electric device 1 through the electrode terminal 214 on the second surface 2121.

As shown in FIG. 4 and FIG. 11, in some embodiments of this application, the electrode terminal 214 includes two electrode terminals 214 with opposite polarities, where the two electrode terminals 214 are disposed on one of the second surfaces 2121, or the two electrode terminals 214 are respectively disposed on the two second surfaces 2121. In some embodiments, one of the two electrode terminals 214 may be formed by the housing 211 of the battery cell 21.

Specifically, as shown in FIG. 4 and FIG. 11, the battery cell 21 includes two electrode terminals 214, and the two electrode terminals 214 are disposed together on one second surface 2121 in the third direction. The third direction may be the vertical direction. In some embodiments of this application, the two electrode terminals 214 may alternatively be respectively disposed on the two second surfaces 2121.

As shown in FIG. 4 and FIG. 12, the battery cell 21 includes two electrode terminals 214, and the two electrode terminals 214 are disposed together on one second surface 2121 in the third direction. The third direction is the horizontal direction. In some embodiments of this application, the two electrode terminals 214 may alternatively be respectively disposed on the two second surfaces 2121.

As shown in FIG. 13 and FIG. 14, the battery cell 21 includes two electrode terminals 214, and the two electrode terminals 214 are respectively disposed on the two second surfaces 2121 in the third direction, where one of the electrode terminals 214 is flush with an end surface of the battery cell 21, and the end of the battery cell 21 is the electrode terminal 214. The third direction is the vertical direction.

As shown in FIG. 16 and FIG. 18, the battery cell 21 includes two electrode terminals 214, and the two electrode terminals 214 may alternatively be respectively disposed on two second surfaces 2121. The third direction is the horizontal direction. In some embodiments of this application, the two electrode terminals 214 may alternatively be disposed together on one second surface 2121 in the third direction.

The two electrode terminals 214 with opposite polarities can be disposed on one second surface 2121 or two second surfaces 2121 respectively of the battery cell 21 as required, so that the electrode terminals 214 avoid the first surface 2111 on which heat exchange with the thermally-conductive member 40 occurs, facilitating subsequent electrical connection with another adjacent battery cell 21.

As shown in FIG. 1, FIG. 19, and FIG. 20, in some embodiments of this application, the electrode terminal 214 is disposed on the first surface 2111.

Specifically, the battery cell 21 includes two electrode terminals 214, and the two electrode terminals 214 are disposed together on the first surface 2111. The length direction of the battery cell 21 is arranged in the first direction, and the two electrode terminals 214 are disposed together on the first surface 2111. The electrode terminals 214 being disposed on the first surface 2111 can reduce space in the battery 10 occupied by the electrode terminals 214 in the first direction or third direction, thereby increasing the energy density of the battery 10.

As shown in FIG. 1, FIG. 19, and FIG. 20, in some embodiments of this application, the battery cell 21 includes the first surface 2111 and a fourth surface opposite the first surface 2111; where the first surface 2111 and the fourth surface are disposed opposite each other along a second direction, and the second direction intersects with both the first direction and the first surface 2111; an edge of the fourth surface is provided with a concave portion; the first surface 2111 is used for arranging the electrode terminal 214; and the electrode terminal 214 protrudes from the first surface 2111 in the second direction and corresponds to the concave portion.

The electrode terminal 214 is disposed on the first surface 2111, and the edge of the fourth surface is provided with the concave portion corresponding to the electrode terminal 214, so that the electrode terminal 214 of an adjacent battery cell 21 is accommodated in the concave portion, and an operating space for electrical connection is left, allowing for more compact overall structure of the battery 10 and high space utilization.

As shown in FIG. 4 and FIG. 11, in some embodiments of this application, the battery cell 21 further includes a pressure relief mechanism 215; and at least one electrode terminal 214 is provided; where the pressure relief mechanism 215 and the at least one electrode terminal 214 are disposed on one second surface 2121, or the pressure relief mechanism 215 and the electrode terminal 214 are respectively disposed on the two second surfaces 2121.

Specifically, as shown in FIG. 4 and FIG. 11, the battery cell 21 further includes a pressure relief mechanism 215, and the pressure relief mechanism 215 and two electrode terminals 214 are disposed together on one second surface 2121 in a third direction, where the third direction is the vertical direction. In some embodiments of this application, the pressure relief mechanism 215 is disposed on one second surface 2121 in the third direction, and the two electrode terminals 214 are disposed together on the other second surface 2121 in the third direction; or the two electrode terminals 214 are respectively disposed on the two second surfaces 2121 in the third direction, and the pressure relief mechanism 215 and one of the electrode terminals 214 are disposed together on one of the second surfaces 2121.

As shown in FIG. 13 and FIG. 14, the battery cell 21 further includes a pressure relief mechanism 215, the electrode terminal 214 protrudes from one of the second surfaces 2121, and the pressure relief mechanism 215 and the protruding electrode terminal 214 are disposed together on the second surface 2121. Alternatively, the electrode terminal 214 protrudes from one of the second surfaces 2121, and the other second surface 2121 with no electrode terminal 214 is provided with the pressure relief mechanism 215.

As shown in FIG. 16 and FIG. 18, the battery cell further includes a pressure relief mechanism 215, the two electrode terminals 214 are respectively disposed on the two second surfaces 2121 in the third direction, and the pressure relief mechanism 215 and one of the electrode terminals 214 are disposed together on one of the second surfaces 2121, where the third direction is the horizontal direction. Alternatively, the pressure relief mechanism 215 is disposed on one second surface 2121 in the third direction, and the two electrode terminals 214 are disposed together on the other second surface 2121 in the third direction; or the pressure relief mechanism 215 and the two electrode terminals 214 are disposed together on one second surface 2121 in the third direction.

The pressure relief mechanism 215 is in communication with the inside of the battery cell 21 and is configured to discharge internal pressure when the internal pressure of the battery cell 21 increases. The pressure relief mechanism 215 and the electrode terminal 214 can be disposed on one second surface 2121 or two second surfaces 2121 respectively as required, so that the pressure relief mechanism 215 avoids the first surface 2111 on which heat exchange with the thermally-conductive member 40 occurs, facilitating smooth degassing by the pressure relief mechanism 215 when thermal runaway occurs in the battery cell 21.

As shown in FIG. 6 and FIG. 11, in some embodiments of this application, the battery cell 21 further includes a pressure relief mechanism 215 and two third surfaces 2112 opposite each other; where the pressure relief mechanism 215 is disposed on at least one of the third surfaces 2112.

Specifically, as shown in FIG. 6 and FIG. 11, the battery cell 21 includes two second surfaces 2121 opposite each other in the third direction, and the second surface 2121 is provided with the electrode terminal 214; and the battery cell 21 further includes two third surfaces 2112 opposite each other in the first direction, and the third surface 2112 is provide with the pressure relief mechanism 215.

As shown in FIG. 17 and FIG. 18, the battery cell 21 includes two second surfaces 2121 opposite each other in the third direction, and the second surface 2121 is provided with the electrode terminal 214; and the battery cell 21 further includes two third surfaces 2112 opposite each other in the first direction, and the third surface 2112 is provide with the pressure relief mechanism 215.

The pressure relief mechanism 215 is disposed on the third surface 2112, and the electrode terminal 214 is disposed on the second surface 2121, so that the pressure relief mechanism 215 is separated from the electrode terminal 214, which is conducive to reducing a risk that degassing by the pressure relief mechanism 215 affects the electrode terminal 214 when thermal runaway occurs in the battery cell 21.

As shown in FIG. 8, in some embodiments of this application, the battery cell 21 further includes a pressure relief mechanism 215; where the pressure relief mechanism 215 is disposed on the first surface 2111. The pressure relief mechanism 215 being disposed on the first surface 2111 facilitates installation of the battery cell 21.

As shown in FIG. 19 and FIG. 20, in some embodiments of this application, the battery cell 21 further includes a pressure relief mechanism 215; where the pressure relief mechanism 215 is disposed on the first surface 2111. The pressure relief mechanism 215 being disposed on the first surface 2111 facilitates installation of the battery cell 21.

As shown in FIG. 4, FIG. 5, and FIG. 11, in some embodiments of this application, the battery cell 21 includes an electrode assembly 213; where the electrode assembly 213 is a wound structure and is flat, and an outer surface of the electrode assembly 213 includes two flat surfaces, the two flat surfaces facing each other in a second direction; or the electrode assembly 213 is a stacked structure, and a first electrode plate, separator and second electrode plate of the electrode assembly 213 are stacked along the second direction; and the second direction intersects with both the first direction and the first surface.

No matter the electrode assembly 213 is arranged as a stacked structure or wound structure, the electrode assembly 213 can effectively supply power to the electric device 1.

As shown in FIG. 4, FIG. 10, and FIG. 11, in some embodiments of this application, the battery module 20 includes at least two battery cells 21, the at least two battery cells 21 being arranged along the first direction.

As shown in FIG. 4, FIG. 10, and FIG. 12, in some embodiments of this application, the battery module 20 includes at least two battery cells 21, the at least two battery cells 21 being arranged along the first direction.

As shown in FIG. 10, FIG. 13, and FIG. 14, in some embodiments of this application, the battery module 20 includes at least two battery cells 21, the at least two battery cells 21 being arranged along the first direction.

As shown in FIG. 10, FIG. 15, and FIG. 16, in some embodiments of this application, the battery module 20 includes at least two battery cells 21, the at least two battery cells 21 being arranged along the first direction. It should be noted that FIG. 15 illustrates only one battery cell 21 in the first direction.

As shown in FIG. 10, FIG. 16, and FIG. 18, in some embodiments of this application, the battery module 20 includes at least two battery cells 21, the at least two battery cells 21 being arranged along the first direction.

As shown in FIG. 10, FIG. 19, and FIG. 20, in some embodiments of this application, the battery module 20 includes at least two battery cells 21, the at least two battery cells 21 being arranged along the first direction. It should be noted that FIG. 19 illustrates only one battery cell 21 in the first direction.

The at least two battery cells 21 are arranged along the first direction, and when heat exchange is needed for the battery cells 21, the thermally-conductive member 40 can be arranged in the first direction, so as to separately perform heat exchange for the at least two battery cells 21 in the battery module 20, thereby increasing the heat exchange speed of the thermally-conductive member 40.

As shown in FIG. 4, FIG. 11, FIG. 13, FIG. 14, FIG. 19, and FIG. 20, in some embodiments of this application, in the first direction, maximum size of the battery cell 21 is L, and in the third direction, maximum size of the battery cell 21 is H, where a value range of L/H is 0.5-6.

When the battery cell 21 is as shown in FIG. 4 or FIG. 20, L/H exhibits a maximum size ratio of 6, and when the battery cell 21 is as shown in FIG. 14, L/H exhibits a minimum size ratio of 0.5.

When the size ratio of L/H is greater than 6, the size of the battery cell 21 in the first direction is excessively large, bringing inconvenience in installation and reducing the support strength of the battery cell 21. When the size ratio of L/H is less than 0.5, the size of the battery cell 21 in the third direction is excessively large, bringing inconvenience in installation and reducing the support strength of the battery cell 21.

It should be noted that the value of L/H may be 0.5, 1, 1.5, 2, 2.5, 3, 3.5, 4, ..., 5, 5.5, ..., or 6. Setting different values of L/H can allow for different shapes of the battery cell 21, thus meeting requirements of different types of batteries 10.

The maximum size H of the battery cell 21 includes the size of the housing 211 and the size of the electrode terminal 214 protruding from the housing 211. The battery cell 21 being set according to the foregoing size ratio can increase the power of the battery cell 21 to the greatest extent on the basis of guaranteeing support strength of the battery cell 21, while also facilitating installation of the battery cell 21.

As shown in FIG. 4, FIG. 11, FIG. 13, FIG. 14, FIG. 19, and FIG. 20, in some embodiments of this application, in the second direction, maximum size of the battery cell 21 is D, where a value range of L/D is 1-30; and the first direction, the second direction, and the third direction intersect with each other.

When the size ratio of L/D is greater than 30, the size of the battery cell 21 in the first direction is excessively large, bringing inconvenience in installation and reducing the support strength of the battery cell 21. When the size ratio of L/D is less than 1, the size of the battery cell 21 in the first direction is excessively small, reducing the power of the battery cell 21.

It should be noted that the value of L/D may be 1, 2, 3, 4, 5, 6, 7, 8, ..., 10, ..., 15, ..., 20, ..., 25, ..., 28, ..., or 30. Setting different values of L/D can allow for different shapes of the battery cell 21, thus meeting requirements of different types of batteries 10.

When the battery cell 21 is as shown in the embodiments in FIG. 15 to FIG. 20, L/D exhibits a maximum size ratio of 30, and when the battery cell 21 is as shown in FIG. 14, L/D exhibits a minimum size ratio of 1. The battery cell 21 being set according to the foregoing size ratio can increase the power of the battery cell 21 to the greatest extent on the basis of guaranteeing the support strength of the battery cell 21.

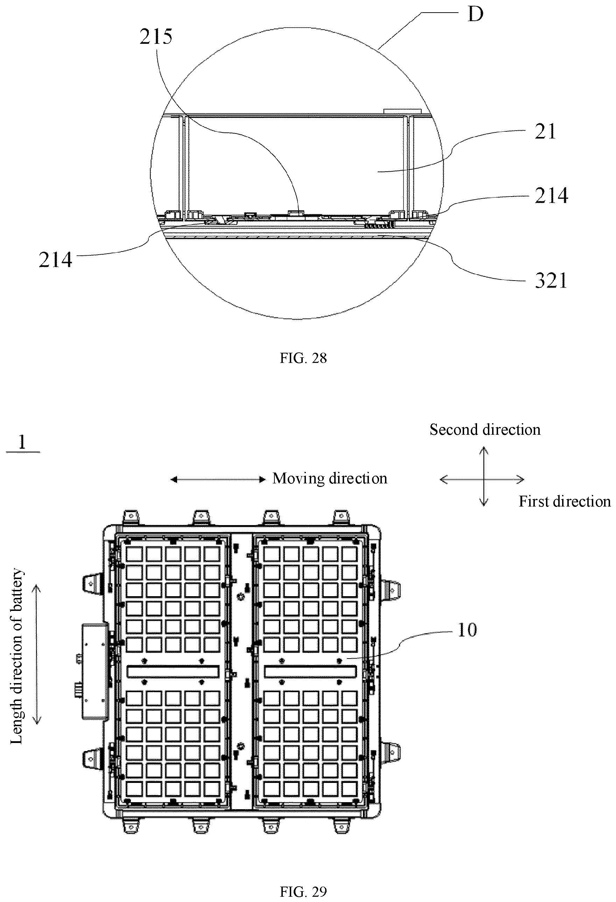

FIG. 27 is a schematic diagram of an internal structure of a second part 32 according to an embodiment of this application. FIG. 28 is a schematic diagram of an enlarged structure of Part D according to an embodiment of this application. As shown in FIG. 4, FIG. 11, FIG. 25, FIG. 26, FIG. 27, and FIG. 28, in some embodiments of this application, the battery 10 further includes a baffle plate 321, where the baffle plate 321 is disposed opposite the second surface 2121, of the battery cell 21, provided with the electrode terminal 214 in the third direction, distance between the electrode terminal 214 and the baffle plate 321 is 1.2-25 mm, and the third direction intersects with both the first direction and the horizontal plane.

Specifically, the baffle plate 321 may be a part of the structure of the box 30 itself, or the baffle plate 321 is connected to the box 30 and disposed in the box 30. The third direction may be the vertical direction.

As shown in FIG. 13, FIG. 14, FIG. 25, FIG. 26, FIG. 27, and FIG. 28, in some embodiments of this application, the battery 21 further includes a baffle plate 321, where the baffle plate 321 is disposed opposite the second surface 2121, of the battery cell 21, provided with the electrode terminal 214 in the third direction, distance between the electrode terminal 214 and the baffle plate 321 is 1.2-25 mm, and the third direction intersects with both the first direction and the horizontal plane.

When the distance between the electrode terminal 214 and the baffle plate 321 is less than 1.2 mm, the electrode terminal 214 is likely to collide with the baffle plate, causing damage to the electrode terminal 214. When the distance between the electrode terminal 214 and the baffle plate 321 is greater than 25 mm, the size of the battery 10 is excessively large, bringing inconvenience in installation of the battery 10.

The baffle plate 321 being arranged at the distance of 1.2-25 mm from the electrode terminal 214 can prevent the baffle plate 321 from colliding with the electrode terminal 214 in the event of collision of the battery 10 in the third direction, which otherwise causes damage to the electrode terminal 214.

It should be noted that the distance between the baffle plate 321 and the electrode terminal 214 may be 1.2 mm, 1.5 mm, 1.8 mm, 2 mm, 3 mm, 4 mm, 5 mm, 6 mm, 7 mm, 8 mm, ..., 10 mm, ..., 15 mm, ..., 20 mm, ..., 23 mm, 24 mm, or 25 mm.

As shown in FIG. 1, FIG. 4, FIG. 11, FIG. 25, FIG. 26, FIG. 27, and FIG. 28, in some embodiments of this application, at least one electrode terminal 214 is located below the battery cell 21, and the baffle plate 321 is located below the electrode terminal 214; or at least one electrode terminal 214 is located above the battery cell 21, and the baffle plate 321 is located above the electrode terminal 214.

Specifically, the electrode terminal 214 and the baffle plate 321 are disposed together in the third direction, and the baffle plate 321 is located below the battery cell 21, to be specific, the baffle plate 321 is disposed closer to the second part 32 than the electrode terminal 214. The third direction may be the vertical direction, and two electrode terminals 214 may be disposed together below the battery cell 21, or one is disposed below the battery cell 21 and the other is disposed above the battery cell 21. Alternatively, the electrode terminal 214 and the baffle plate 321 are disposed together in the third direction, and the baffle plate 321 is located above the battery cell 21, to be specific, the baffle plate 321 is disposed closer to the first part 31 than the electrode terminal 214. Two electrode terminals 214 may be disposed together above the battery cell 21, or one is disposed below the battery cell 21 and the other is disposed above the battery cell 1.

As shown in FIG. 1, FIG. 13, FIG. 14, FIG. 25, FIG. 26, FIG. 27, and FIG. 28, in some embodiments of this application, the battery cell 21 includes a protruding electrode terminal 214, where the protruding electrode terminal 214 is located below the battery cell 21, and the baffle plate 321 is located below the electrode terminal 214; or the protruding electrode terminal 214 is located above the battery cell 21, and the baffle plate 321 may be located above the electrode terminal 214.

The baffle plate 321 is disposed below the electrode terminal 214 in the third direction or above the electrode terminal 214 in the third direction, so as to facilitate reasonable arrangement based on actual installation positions.

As shown in FIG. 4, FIG. 11, FIG. 25, and FIG. 26, in some embodiments of this application, the electrode terminal 214 is disposed on one second surface 2121; the battery 10 includes a support plate 311, where the battery cell 21 is fixedly connected to the support plate 311 via the other second surface 2121 with no electrode terminal 214; and the second direction intersects with both the first direction and the horizontal plane.

Specifically, the support plate 311 may be a part of the structure of the box 30 itself, or the support plate 311 is connected to the box 30 and disposed in the box 30. The support plate 311 may be disposed at the first part 31 or the second part 32.

As shown in FIG. 4, FIG. 11, FIG. 25, and FIG. 26, two electrode terminals 214 may be disposed together on one of the second surfaces 2121 of the battery cell 21 in the third direction, and the other second surface 2121 with no electrode terminal 214 is fixedly connected to the support plate 311, so that the battery cell 21 is fixedly disposed in the box 30.

As shown in FIG. 13, FIG. 14, FIG. 25, and FIG. 26, two electrode terminals 214 protrude from one of the second surfaces 2121, and the other second surface 2121 with no protruding electrode terminal 214 is fixedly connected to the support plate 311.

The battery cell 21 is fixed in the box 30 via the support plate 311, facilitating installation and fixing of the battery cell 21.

As shown in FIG. 4, FIG. 11, FIG. 25, and FIG. 26, in some embodiments of this application, the other second surface 2121 is fixedly connected to the support plate 311 through a first adhesion layer 61; and the thermally-conductive member 40 is in thermal-conduction connection with the first surface 2111 through a second adhesion layer 62; where a thermal conductivity coefficient of the first adhesion layer 61 is less than or equal to a thermal conductivity coefficient of the second adhesion layer 62.

Specifically, the surface with no electrode terminal 214 is fixedly connected to the support plate 311 through the first adhesion layer 61.

As shown in FIG. 13, FIG. 14, FIG. 25, and FIG. 26, in some embodiments of this application, the second surface 2121 with no protruding electrode terminal 214 is fixedly connected to the support plate 311 through the first adhesion layer 61; and the thermally-conductive member 40 is in thermal-conduction connection with the first surface 2111 through the second adhesion layer 62. The first adhesion layer 61 and the second adhesion layer 62 may both be thermally-conductive polyurethane adhesive layers, and different amounts of thermally-conductive particles are added to achieve different thermal conductivity coefficients.

Since the first adhesion layer 61 is used to connect the second surface 2121 and the support plate 311, and the second adhesion layer 62 is used for thermal-conduction connection between the first surface 2111 and the thermally-conductive member 40, the thermal conductivity coefficient of the first adhesion layer 61 is set to be less than or equal to the thermal conductivity coefficient of the second adhesion layer 62, so as to ensure more effective heat exchange for the battery cell 21 through the thermally-conductive member 40.

As shown in FIG. 25 and FIG. 26, in some embodiments of this application, a value range of a ratio of the thermal conductivity coefficient of the first adhesion layer 61 to the thermal conductivity coefficient of the second adhesion layer 62 is 0.1-1. A setting based on the above ratio can allow for effective heat exchange for the battery cell 21 through the thermally-conductive member 40.

It should be understood that when the ratio of the thermal conductivity coefficient of the first adhesion layer 61 to the thermal conductivity coefficient of the second adhesion layer 62 is less than 0.1, the first adhesion layer 61 has poor heat conduction capability, so the support plate 311 connected to the first adhesion layer 61 cannot conduct heat transfer through the side on which the first adhesion layer 61 is located, making it impossible to perform heat exchange for the support plate 311. When the ratio of the thermal conductivity coefficient of the first adhesion layer 61 to the thermal conductivity coefficient of the second adhesion layer 62 is greater than 1, the first adhesion layer 61 has stronger heat conduction capability than the second adhesion layer 62, and the heat dissipation capability of the battery cell 21 through the thermally-conductive member 40 is weakened, leading to deteriorated heat dissipation effect for the battery cell 21.

It should be noted that the ratio of the thermal conductivity coefficient of the first adhesion layer 61 to the thermal conductivity coefficient of the second adhesion layer 62 may be 0.1, 0.2, 0.3, 0.4, 0.5, 0.6, 0.7, 0.8, 0.9, ..., or 1.

As shown in FIG. 1 to FIG. 28, a second aspect of this application proposes an electric device 1 including the battery 10 according to any one of the foregoing embodiments, where the battery 10 is configured to supply electrical energy to drive the electric device 1 to move.

FIG. 29 is a schematic diagram of a distribution structure of a battery 10 in an electric device 1 according to an embodiment of this application. As shown in FIG. 1 to FIG. 29, in some embodiments of this application, under a condition that the length direction of the battery 10 is different from the moving direction of the electric device 1, the first direction is the moving direction of the electric device 1.

In some embodiments, the length direction of the battery 10 may be perpendicular to the moving direction of the electric device 1. For example, one or more batteries 10 may be arranged along the moving direction of the electric device 1, and when a plurality of batteries 10 are arranged, the length direction of at least one battery 10 is perpendicular to the moving direction of the electric device 1. In such embodiment, the first direction is the moving direction of the electric device 1. In other words, in the battery 10 whose length direction is perpendicular to the moving direction of the electric device 1, the battery module 20 and the thermally-conductive member 40 are arranged along the width direction of the battery 10, consistent with the moving direction of the electric device 1.

The electric device 1 of this application may be a mobile phone, a portable device, a notebook computer, an electric bicycle, an electric toy, an electric tool, an electric vehicle, a ship, a spacecraft, or the like. For example, the spacecraft includes an airplane, a rocket, a space shuttle, a spaceship, and the like.

The first direction is set as the moving direction of the electric device 1, and because the thermally-conductive member 40 is disposed in the first direction, that is, the thermally-conductive member 40 is disposed in the moving direction of the electric device 1 with the battery 10, and two ends of the thermally-conductive member 40 are respectively disposed at two ends of the electric device 1 in the moving direction, in the event of collision of the electric device 1 in a lateral direction, an impact force does not directly act on the end of the thermally-conductive member 40, thereby preventing damage to the thermally-conductive member 40 and guaranteeing safety and reliability of the battery 10 in use.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

As shown in FIG. 1, FIG. 4, FIG. 5, FIG. 10, FIG. 11, and FIG. 21 to FIG. 28, in an embodiment of this application, an electric device 1 includes a battery 10, where the battery 10 is configured to supply electrical energy to drive the electric device 1 to move. The battery 10 includes a box 30 and a plurality of battery modules 20 disposed in the box 30. The box 30 includes a first part 31 and a second part 32, where the first part 31 and the second part 32 enclose a space for accommodating the battery modules 20. The plurality of battery modules 20 are disposed along a first direction and arranged along a second direction. The battery module 20 includes a plurality of battery cells 21, where a length direction of the battery cell 21 is arranged in the first direction, a width direction of the battery cell 21 is arranged in the second direction, and a height direction of the battery cell 21 is arranged in a third direction. The battery cell 21 includes two third surfaces 2112 opposite each other in the first direction, two first surfaces 2111 opposite each other in the second direction, and two second surfaces 2121 opposite each other in the third direction, the first surface 2111 being the surface with the largest area of the battery cell 21. The first direction is the moving direction of the electric device 1, the length direction of the battery 10 is parallel to the moving direction of the electric device 1, the second direction is a lateral direction of the moving direction of the electric device 1, and the third direction is the vertical direction.

The battery cell 21 includes an electrode assembly 213, the electrode assembly 213 includes a body portion 2131 and a tab 2132 protruding from the body portion 2131, and the tab 2132 is electrically connected to an electrode terminal 214. In the second direction, projections of the thermally-conductive member 40 and the body portion 2131 at least partially overlap and have an overlapping region. In the third direction, size of the body portion 2131 is L1, size of the thermally-conductive member 40 is L2, and size of the overlapping region is L3, where 0.5 ≤ L2/L1 ≤ 1.5, and 0.5 ≤ L3/L1 ≤ 1.

The battery cell 21 includes two electrode terminals 214 with opposite polarities, and the two electrode terminals 214 are disposed on one second surface 2121. The battery cell 21 further includes a pressure relief mechanism 215, and the pressure relief mechanism 215 and the two electrode terminals 214 are disposed on one second surface 2121. In the first direction, maximum size of the battery cell 21 is L, and in the third direction, maximum size of the battery cell 21 is H, where a value range of L/H is 0.5-6. In the second direction, maximum size of the battery cell 21 is D, where a value range of L/D is 1-30. The battery 10 further includes a baffle plate 321, where the baffle plate 321 is disposed at the second part 32. The baffle plate 321 is disposed opposite the second surface 2121 of the battery cell 21 provided with the electrode terminal 214 in the third direction. The electrode terminal 214 is located below the battery cell 21, and the baffle plate 214 is located below the electrode terminal 214. Distance between the electrode terminal 214 and the baffle plate 321 is 1.2 mm-25 m.

The box body 30 is further provided with a plurality of thermally-conductive members 40 inside, where the thermally-conductive member 40 is disposed in the first direction and the plurality of thermally-conductive members 40 are arranged along the second direction. Two sides of the battery module 20 are respectively provided with the thermally-conductive members 40, and the first surfaces 2111 disposed on the two sides in the second direction are respectively in thermal-conduction connection with the thermally-conductive members 40. A heat exchange medium channel is provided in the thermally-conductive member 40. The battery 10 further includes a fluid collecting member 50, where the fluid collecting member 50 extends along the second direction and is in fluid communication with the plurality of thermally-conductive members 40. Two fluid collecting members 50 are provided, where the two fluid collecting members are disposed together at one end of the electric device 1 in the moving direction and are apart from each other along the third direction.

The box body 30 is further provided with a support plate 311 inside, where the support plate 311 is disposed at the first part 31. The second surface 2121 of the battery cell 21 with no electrode terminal 214 is fixedly connected to the support plate 311 through a first adhesion layer 61; and the thermally-conductive member 40 is in thermal-conduction connection with the first surface 2111 through a second adhesion layer 62. A value range of a ratio of a thermal conductivity coefficient of the first adhesion layer 61 to a thermal conductivity coefficient of the second adhesion layer 62 is 0.1-1.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery, **characterized by** comprising:
a thermally-conductive member (40), wherein the thermally-conductive member (40) is disposed in a first direction, and the first direction is a length direction of the battery (10) or a moving direction of an electric device (1) with the battery (10); and
a battery module (20), wherein the battery module (20) comprises at least one battery cell (21), and the battery module (20) is disposed in the first direction; wherein
the battery cell (21) comprises a plurality of surfaces, the plurality of surfaces comprising a first surface (2111) with the largest area; and the battery cell (21) is in thermal-conduction connection with the thermally -conductive member (40) at least via the first surface (2111).

2. The battery according to claim 1, **characterized in that** the first surface (2111) intersects with the horizontal plane.

3. The battery according to claim 2, **characterized by** comprising at least two battery modules (20); wherein in a second direction, two sides of the thermally-conductive member (40) are in thermal-conduction connection with the two battery modules (20) respectively; and the second direction intersects with both the first direction and the first surface (2111).

4. The battery according to claim 2, **characterized by** comprising at least two battery modules (20) and at least one thermally-conductive member that are arranged along a second direction; wherein one first surface of each battery cell in each battery module (20) is in thermal-conduction connection with one thermally-conductive member (40); and the second direction intersects with both the first direction and the first surface (2111).

5. The battery according to any one of claims 1 to 3, **characterized in that** the length direction of the battery (10) is parallel to or intersects with the moving direction of the electric device (1).

6. The battery according to any one of claims 1 to 3, **characterized in that** a heat exchange medium channel is provided in the thermally-conductive member (40).

7. The battery according to any one of claims 1 to 3, **characterized in that** the battery (10) comprises a plurality of thermally-conductive members (40), wherein the plurality of thermally-conductive members (40) are arranged along a second direction, and the second direction intersects with both the first direction and the first surface (2111).

8. The battery according to claim 7, **characterized in that** in the second direction, two sides of the battery module (20) are respectively provided with the thermally-conductive members (40); and the battery module (20) is in thermal-conduction connection with the thermally-conductive members (40) on the two sides.

9. The battery according to claim 8, **characterized in that** in the second direction, the battery cell (21) comprises two opposite first surfaces (2111), and the two first surfaces (2111) of the battery cell (21) are each in thermal-conduction connection with one of the thermally-conductive members (40).

10. The battery according to claim 2 or 3, **characterized in that** the battery cell (21) comprises an electrode assembly (213), the electrode assembly (213) comprises a body portion (2131) and a tab (2132) protruding from the body portion (2131), and the tab (2132) is electrically connected to the electrode terminal (214); and in a second direction, projections of the thermally-conductive member (40) and the body portion (2131) at least partially overlap and have an overlapping region, and the second direction intersects with both the first direction and the first surface (2111).

11. The battery according to claim 10, **characterized in that** in a third direction, size of the body portion (2131) is L1, and size of the thermally-conductive member (40) is L2, wherein 0.5 ≤ L2/L1 ≤ 1.5, and the first direction, the second direction, and the third direction intersect with each other.

12. The battery according to claim 11, **characterized in that** in the third direction, size of the overlapping region is L3, wherein 0.5 ≤ L3/L1 ≤ 1.

13. The battery according to any one of claims 7 to 9, **characterized in that** the battery (10) further comprises a fluid collecting member (50), wherein the fluid collecting member (50) is in fluid communication with heat exchange medium channels inside the plurality of thermally-conductive members (40);
wherein one end of the thermally-conductive member (40) in the first direction is provided with the fluid collecting member (50), or two ends of the thermally-conductive member (40) in the first direction are each provided with the fluid collecting member (50).

14. The battery according to claim 13, **characterized in that** two fluid collecting members (50) are provided, wherein the two fluid collecting members (50) are disposed at one end of the thermally-conductive member (40) in the first direction, the two fluid collecting members (50) are arranged along a third direction, and the first direction, the second direction, and the third direction intersect with each other.

15. The battery according to any one of claims 1 to 3, **characterized in that** the battery cell (21) comprises two second surfaces (2121); wherein the two second surfaces (2121) are disposed opposite each other along a second direction or a third direction; the first direction, the second direction, and the third direction intersect with each other; the battery cell (21) comprises an electrode terminal (214), the electrode terminal (214) being disposed on the second surface (2121); and a surface area of the second surface (2121) is smaller than a surface area of the first surface (2111).

16. The battery according to claim 15, **characterized in that** the electrode terminal (214) comprises two electrode terminals (214) with opposite polarities, wherein the two electrode terminals (214) are disposed on one of the second surfaces (2121), or the two electrode terminals (214) are respectively disposed on the two second surfaces (2121).

17. The battery according to any one of claims 1 to 3, **characterized in that** the battery cell (21) comprises an electrode terminal (214), wherein the electrode terminal (214) is disposed on the first surface (2111).

18. The battery according to claim 17, **characterized in that** the battery cell (21) comprises the first surface (2111) and a fourth surface opposite the first surface; wherein the first surface (2111) and the fourth surface are disposed opposite each other along a second direction, and the second direction intersects with both the first direction and the first surface (2111); an edge of the fourth surface is provided with a concave portion; the first surface (2111) is used for arranging the electrode terminal (214); and the electrode terminal (214) protrudes from the first surface (2111) in the second direction and corresponds to the concave portion.

19. The battery according to claim 15, **characterized in that** the battery cell (21) further comprises a pressure relief mechanism (215); and at least one electrode terminal (214) is provided; wherein the pressure relief mechanism (215) and the at least one electrode terminal (214) are disposed on one second surface (2121), or the pressure relief mechanism (215) and the electrode terminal (214) are respectively disposed on the two second surfaces (2121).

20. The battery according to claim 15, **characterized in that** the battery cell (21) further comprises a pressure relief mechanism (215) and two third surfaces opposite each other; wherein the pressure relief mechanism (215) is disposed on at least one of the third surfaces (2121).

21. The battery according to claim 15, **characterized in that** the battery cell (21) further comprises a pressure relief mechanism (215); wherein the pressure relief mechanism (215) is disposed on the first surface.

22. The battery according to any one of claims 1 to 3, **characterized in that** the battery cell (21) comprises an electrode assembly (213); wherein the electrode assembly (213) is a wound structure and is flat, and an outer surface of the electrode assembly (213) comprises two flat surfaces, the two flat surfaces facing each other in a second direction; or
the electrode assembly (213) is a stacked structure, and a first electrode plate, separator and second electrode plate of the electrode assembly (213) are stacked along the second direction; and
the second direction intersects with both the first direction and the first surface (2111).

23. The battery according to any one of claims 1 to 3, **characterized in that** the battery module (20) comprises at least two battery cells (21), the at least two battery cells (21) being arranged along the first direction.

24. The battery according to claim 3 or 7, **characterized in that** in the first direction, maximum size of the battery cell (21) is L, and in the second direction, maximum size of the battery cell (21) is D, wherein a value range of L/D is 1-30.

25. The battery according to claim 24, **characterized in that** in a third direction, maximum size of the battery cell (21) is H, a value range of L/H being 0.5-6; and the first direction, the second direction, and the third direction intersect with each other.

26. The battery according to claim 15, **characterized in that** the electrode terminal is disposed on one second surface (2121); the battery (10) comprises a support plate (311), wherein the battery cell (21) is fixedly connected to the support plate (311) via the other second surface (2121) with no electrode terminal (214); and the second surface (2121) intersects with both the first direction and the horizontal plane.

27. The battery according to claim 26, **characterized in that** the other second surface is fixedly connected to the support plate through a first adhesion layer (61); and the thermally-conductive member is in thermal-conduction connection with the first surface (2111) through a second adhesion layer (62); wherein a thermal conductivity coefficient of the first adhesion layer (61) is less than or equal to a thermal conductivity coefficient of the second adhesion layer (62).

28. The battery according to claim 27, **characterized in that** a value range of a ratio of the thermal conductivity coefficient of the first adhesion layer (61) to the thermal conductivity coefficient of the second adhesion layer (62) is 0.1-1.

29. An electric device, **characterized by** comprising the battery (10) according to any one of claims 1 to 28, wherein the battery (10) is configured to supply electrical energy to drive the electric device (1) to move.

30. The electric device according to claim 29, **characterized in that** under a condition that the length direction of the battery (10) is different from the moving direction of the electric device (1), the first direction is the moving direction of the electric device (1).
